(19) Europäisches Patentamt
European Patent Office
Office européen des brevets

(11) **EP 4 773 352 A1**

(12) **EUROPEAN PATENT APPLICATION**
published in accordance with Art. 153(4) EPC

(43) Date of publication:
08.07.2026 Bulletin 2026/28

(21) Application number: 24883761.9

(22) Date of filing: 14.03.2024

(51) International Patent Classification (IPC):
$H01M\ 50/102^{(2021.01)}$  $H01M\ 50/627^{(2021.01)}$
$H01M\ 50/30^{(2021.01)}$  $H01M\ 10/04^{(2006.01)}$
$H01M\ 10/058^{(2010.01)}$  $H01M\ 10/0525^{(2010.01)}$

(52) Cooperative Patent Classification (CPC):
H01M 10/04; H01M 10/0525; H01M 10/058;
H01M 50/102; H01M 50/30; H01M 50/627;
Y02E 60/10

(86) International application number:
PCT/CN2024/081662

(87) International publication number:
WO 2025/091746 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.11.2023 CN 202311458303

(71) Applicant: Contemporary Amperex Technology
Co., Limited
Ningde, Fujian 352100 (CN)

(72) Inventor: LIU, Huaiwen
Ningde, Fujian 352100 (CN)

(74) Representative: Ziebig Hengelhaupt Intellectual
Property Attorneys
Patentanwaltskanzlei PartGmbB
Leipziger Straße 49
10117 Berlin (DE)

(54) **BATTERY CELL, BATTERY AND ELECTRICAL APPARATUS**

(57) Disclosed in the present application are a battery cell, a battery and an electrical apparatus. The battery cell comprises an electrode assembly and a casing; the electrode assembly comprises a main body part and a first tab, the first tab extending out of one end of the main body part in a first direction; the casing is provided with an accommodation cavity, the electrode assembly being arranged in the accommodation cavity; the casing is provided with a first through hole and a second through hole, the portion of the accommodation cavity located on the side of the first tab is communicated with the first through hole, and the portion of the accommodation cavity located on the side of the main body part facing away from the first tab is communicated with the second through hole, the first through hole being used for injection of an electrolyte; in the axial direction of the first through hole, both the first tab and the main body part do not overlap the first through hole. The present application can improve the cycle performance of battery cells.

FIG. 4

## Description

### CROSS-REFERENCE TO RELATED APPLICATION

The present application claims priority to Chinese Patent Application No. 202311458303.3 filed on November 03, 2023 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

In the development of battery technology, how to improve the cycle performance of battery cells is a research direction in the battery technology.

### SUMMARY

The present application provides a battery cell, a battery, and an electric device, which can improve the cycle performance of the battery cell.

In a first aspect, the present application provides a battery cell, including an electrode assembly and a housing. The electrode assembly includes a main body part and a first tab, and the first tab extends from one end of the main body part in a first direction. The housing is provided with an accommodating cavity, and the electrode assembly is disposed in the accommodating cavity. The housing is provided with a first through hole and a second through hole, a portion of the accommodating cavity on a side of the first tab communicates with the first through hole, a portion of the accommodating cavity on a side of the main body part facing away from the first tab communicates with the second through hole, and the first through hole is configured to inject an electrolyte. In an axial direction of the first through hole, neither the first tab nor the main body part overlaps with the first through hole.

During the production process of the battery cell, the electrolyte may be injected into the accommodating cavity through the first through hole. During the process of injecting the electrolyte, the gas in the accommodating cavity may be discharged through the second through hole, such that the electrolyte can be injected into the interior of the battery cell in a normal pressure state, the resistance to electrolyte injection is reduced, and the conventional vacuumizing process is omitted, thereby improving the efficiency. The first through hole and the second through hole respectively communicate with the spaces on two sides of the main body part in the first direction, such that the electrolyte fully infiltrates the main body part during the flowing process, the infiltration effect of the electrolyte on the electrode assembly is improved, and the cycle performance of the battery cell is improved. When the electrolyte passes through the first through hole, the flow direction of the electrolyte is generally parallel to the axial direction of the first through hole. In the embodiments of the present application, the risk that the electrolyte directly impacts the main body part and the first tab after flowing out of the first through hole can be reduced, thereby reducing the impact force on the first tab and the main body part, reducing the deformation of the first tab and the main body part, and improving the reliability of the battery cell.

In some embodiments, the housing includes a first housing wall and a second housing wall oppositely disposed in a second direction, the main body part is located between the first housing wall and the second housing wall, and the second direction is parallel to a thickness direction of the battery cell and perpendicular to the first direction. The first housing wall is a flat wall, and the first through hole is disposed in the first housing wall. The first housing wall is located on a side of the electrode assembly in a thickness direction, and is relatively flat and has a relatively large area, such that the arrangement of the first through hole is facilitated.

In some embodiments, a minimum hole diameter of the first through hole is D1, a dimension of the first housing wall in a third direction is W, and the third direction is perpendicular to the first direction and the second direction; $0.02 \leq D1/W \leq 0.2$.

D1/W is defined to be greater than or equal to 0.02 to improve the injection efficiency of the electrolyte and enhance the consistency of electrolyte infiltration into the electrode assembly. D1/W is defined to be less than or equal to 0.2 to reduce the strength damage of the first housing wall at the first through hole, reduce the risk of cracking of the first housing wall when the battery cell is subjected to external impact, and improve the reliability.

In some embodiments, $2\,mm \leq D1 \leq 10\,mm$, so as to improve the injection efficiency of the electrolyte, reduce the strength loss of the first housing wall, and lower the requirements for the liquid injection device.

In some embodiments, the battery cell further includes a first sealing member, and the first sealing member is connected to the housing and configured to seal the first through hole, so as to reduce the risk that the accommodating cavity is in communication with an external space of the battery cell via the first through hole.

In some embodiments, the first sealing member includes a first protrusion and a connecting part disposed around the first protrusion, the connecting part is located on an outer side of the housing and connected to the housing, and the first protrusion protrudes from a surface of the connecting part facing away from the housing.

The first protrusion may function as a reinforcing rib to improve the strength of the housing at the first through hole, reduce the risk of cracking of the housing around the first through hole when the battery cell is subjected to an external impact, and improve the reliability of the battery cell.

In some embodiments, in the axial direction of the first through hole, a dimension $H2$ of the first protrusion protruding from an outer surface of the housing satisfies: $0.5\,\text{mm} \leq H2 \leq 2\,\text{mm}$. $H2$ is defined to be greater than or equal to 0.5 mm to enhance the strength of the first sealing member, compensate for the strength of the housing, reduce the risk of cracking of the housing, and improve the reliability of the battery cell. $H2$ is defined to be less than or equal to 2 mm to reduce the additional space occupied by the first sealing member in the axial direction of the first through hole and reduce the loss of energy density of the battery cell.

In some embodiments, the first sealing member is provided with a first recess at a position corresponding to the first protrusion, and the first recess is recessed relative to a surface of the connecting part facing the housing. By providing the first recess, the weight of the first sealing member can be reduced, and the energy density of the battery cell can be improved.

In some embodiments, the battery cell further includes a second sealing member, where a portion of the second sealing member is inserted into the first through hole, and another portion of the second sealing member is accommodated in the first recess.

The second sealing member and the first sealing member can play a double-layer sealing role, thereby improving the sealing performance, reducing the risk of electrolyte leakage, and improving the reliability of the battery cell. The first recess can not only form a clearance for the second sealing member, but also limit and fix the second sealing member, thereby reducing the risk of loosening of the second sealing member when the battery cell is subjected to external impacts, and improving the sealing performance and the reliability of the battery cell.

In some embodiments, an outer side of the housing is provided with a housing recess. In the second direction, the first sealing member is located on a side of the housing facing away from the housing recess, and the second direction is perpendicular to the first direction.

By providing the housing recess, the volume of the battery cell can be reduced, and the energy density can be improved. When the plurality of battery cells are disposed in the second direction, the housing recess of one battery cell can form a clearance for the first sealing member of another battery cell, thereby improving the space utilization rate and improving the energy density of the battery.

In some embodiments, the first sealing member is welded to the housing and forms a welded part. Welding can enhance the connection strength of the first sealing member to the housing and improve the sealing performance.

In some embodiments, the housing is provided with a weak part, and a minimum distance between the welded part and the weak part is greater than or equal to 1 mm, so as to reduce the influence of the heat-affected zone on the weak part, reduce the thermal stress on the weak part after welding, reduce the risk of fracture failure of the weak part, and improve the reliability of the battery cell.

In some embodiments, the welded part is annular, an outer diameter of the welded part is $D2$, the minimum hole diameter of the first through hole is $D1$, and $1.6 \leq D2/D1 \leq 2.5$.

$D2/D1$ is defined to be greater than or equal to 1.6 to enhance the strength of the welded part, improve the structural strength of the battery cell around the first through hole, and reduce the risk of cracking of the housing around the first through hole. $D2/D1$ is defined to be less than or equal to 2.5 to limit the heat-affected zone generated by welding and reduce the risk of failure of other structures of the battery cell under the action of thermal stress.

In some embodiments, an area of the welded part is $S1$, an area of a minimum cross section of the first through hole perpendicular to the axial direction thereof is $S2$, and $1.5 \leq S1/S2 \leq 5$.

$S1/S2$ is defined to be greater than or equal to 1.5 to enhance the connection strength between the first sealing member and the housing, improve the structural strength of the battery cell around the first through hole, and reduce the risk of cracking of the housing around the first through hole. In the embodiments of the present application, $S1/S2$ is defined to be less than or equal to 5 to limit the heat-affected zone generated by welding and reduce the risk of failure of other structures of the battery cell under the action of thermal stress.

In some embodiments, the housing is provided with a second recess, and the first through hole extends inward from a bottom surface of the second recess. At least a portion of the first sealing member is configured to be accommodated in the second recess.

When the first sealing member is assembled, the second recess can play a positioning role, thereby simplifying the assembly process of the first sealing member. By providing the second recess, the additional space occupied by the first sealing member in the axial direction of the first through hole can also be reduced, thereby improving the space utilization rate.

In some embodiments, the battery cell further includes a second sealing member, and a portion of the second sealing member is inserted into the first through hole.

In some embodiments, the housing includes a first housing wall. The first housing wall includes a wall main body and a first convex wall, and at least a portion of the first convex wall protrudes from a surface of the wall main body facing the main body part and is located on a side of the main body part in the first direction. The first convex wall includes a first wall body configured to define the first through hole.

By providing the first convex wall that protrudes inward, the depth of the first through hole can be increased, the structural strength of the first housing wall around the first through hole can be improved, and the deformation of the first housing wall can be reduced.

In some embodiments, a dimension of the first wall body in the second direction is H1, the minimum hole diameter of the first through hole is D1, and $0.2 \leq H1/D1 \leq 1$. The second direction is parallel to a thickness direction of the wall main body.

H1/D1 is defined to be greater than or equal to 0.2 to enhance the structural strength and the stability of the first wall body and reduce the risk of deformation and cracking of the first wall body. H1/D1 is defined to be less than or equal to 1 to reduce the occupation of the first wall body on the internal space of the housing, reduce the resistance of the electrolyte to flow in the housing, and improve the liquid injection efficiency.

In some embodiments, the battery cell further includes a second sealing member, and at least a portion of the second sealing member is inserted into the first through hole and detachably connected to the first convex wall.

The second sealing member may be configured to seal the first through hole to improve the sealing performance of the battery cell. The second sealing member can be disassembled and assembled multiple times during the production process of the battery cell, so as to facilitate multiple processing processes of the battery cell through the first through hole. The first convex wall has a relatively large dimension in the second direction, and the second sealing member is connected to the first convex wall, such that the connection strength can be improved.

In some embodiments, the second sealing member is in interference fit with the first through hole. The interference fit manner can not only effectively seal the first through hole, but also facilitate disassembly and assembly of the second sealing member.

In some embodiments, the second sealing member is provided with a large end and a small end oppositely disposed in the axial direction of the first through hole, and the small end is located on an inner side of the large end. A ratio of a diameter D4 of the small end to the minimum hole diameter D1 of the first through hole is 0.95-1.05, and a diameter of the large end is greater than a maximum hole diameter of the first through hole.

D4/D1 is defined to be 0.95-1.05 to facilitate the insertion of the second sealing member into the first through hole. The large end of the second sealing member has a relatively large dimension, which can reduce the risk of the second sealing member falling into the accommodating cavity through the first through hole, effectively cover the first through hole, and improve the sealing performance.

In some embodiments, an outer periphery of the second sealing member is provided with an annular third recess, and at least a portion of the first wall body is accommodated in the third recess.

The first wall body may be embedded in the third recess and form a riveting structure with the second sealing member, such that the first wall body can limit the movement of the second sealing member in the second direction, thereby improving the stability of the second sealing member and improving the sealing performance.

In some embodiments, the first convex wall further includes a second wall body, the second wall body is disposed around the first wall body and connected to the wall main body and the first wall body, the second wall body protrudes inward from the wall main body and is configured to define the second recess, the second recess is recessed from an outer surface of the wall main body, and the first through hole extends inward from the bottom surface of the second recess. At least a portion of the second sealing member is accommodated in the second recess.

The second wall body forms a structure that is convex inside and concave outside, which can enhance the strength of the first housing wall and reduce the risk of deformation and cracking of the first housing wall. The second recess may further accommodate a portion of the second sealing member, so as to reduce the additional space occupied by the second sealing member in the axial direction of the first through hole, thereby improving the space utilization rate.

In some embodiments, the second wall body is provided with a step surface, and in the axial direction of the first through hole, the step surface is closer to the outer surface of the wall main body than the bottom surface of the second recess. A projection of the step surface in the axial direction of the first through hole surrounds a projection of the bottom surface of the second recess in the axial direction of the first through hole. The battery cell further includes the first sealing member, and at least a portion of the first sealing member is accommodated in the second recess and abuts against the step surface.

By providing the step structure, the overall structural strength of the second wall body can be improved. The step surface and the bottom surface of the second recess can limit the first sealing member and the second sealing member, respectively, and reduce the risk of the second sealing member being pressed and extending between the first sealing member and the step surface, thereby preventing the second sealing member from interfering with the connection between the first sealing member and the second wall body to a certain extent, and improving the reliability.

In some embodiments, the battery cell further includes a support, and the support is accommodated in the housing. The support is provided with a drainage recess in communication with the first through hole, and the drainage recess is in communication with a space between the main body part and the support. In the axial direction of the first through hole, the first through hole is opposite to a bottom wall of the drainage recess.

The bottom wall of the drainage recess may bear the impact of the electrolyte and guide the electrolyte to flow in the drainage recess, thereby reducing the impact of the electrolyte on the main body part and reducing the deformation of a separator of the main body part. The support may also support the housing to reduce the risk of the housing being pressed and deformed by an external device during the injection process of the electrolyte and improve the reliability of the battery cell.

In some embodiments, the housing includes the first housing wall, the first housing wall includes the wall main body and the first convex wall, and at least a portion of the first convex wall protrudes from the surface of the wall main body facing the main body part and is located on the side of the main body part in the first direction; the first convex wall includes the first wall body configured to define the first through hole. At least a portion of the first wall body is accommodated in the drainage recess and is spaced apart from the bottom wall of the drainage recess.

The drainage recess may further form a clearance for the first wall body, provide more space for the first wall body, and increase the depth of the first through hole.

In some embodiments, a minimum hole diameter of the second through hole is smaller than the minimum hole diameter of the first through hole. During the liquid injection process, the second through hole is configured to discharge gas to stabilize the gas pressure. The gas has stronger fluidity than the liquid, so the second through hole may have a smaller hole diameter to reduce the loss of strength of the housing.

In some embodiments, the minimum hole diameter of the second through hole is equal to the minimum hole diameter of the first through hole. The first through hole and the second through hole are interchangeable. The external device may inject the electrolyte into the accommodating cavity through the first through hole, or may inject the electrolyte into the accommodating cavity through the second through hole.

In some embodiments, the second through hole is configured to inject the electrolyte. The first through hole and the second through hole are configured to inject the electrolyte at the same time, which can improve the electrolyte injection efficiency.

In some embodiments, the housing includes a housing body and a cover plate, the housing body is provided with an opening, and the cover plate lids the opening. The first through hole and the second through hole are disposed on the cover plate, thereby simplifying the forming process of the housing body.

In some embodiments, a dimension of the housing along the first direction is L1, a dimension of the housing along the second direction is L2, a dimension of the housing along the third direction is L3, and any two of the first direction, the second direction, and the third direction are perpendicular to each other. $1.2 \leq L1/L3 \leq 18$, and $1.2 \leq L3/L2 \leq 15$.

On the premise that the volume of the battery cell is constant, L1/L3 is defined to be 1.2-18, and L3/L2 is defined to be 1.2-15, such that the space utilization rate of the battery cell in the first direction and the current passage capacity of the first tab can be balanced, the temperature rise of the battery cell can be reduced, the risk of deformation of the battery cell under external impact can be reduced, and the reliability and the cycle performance of the battery cell can be improved.

In a second aspect, the present application provides a battery. The battery includes a plurality of battery cells according to any one of the embodiments of the first aspect.

In a third aspect, the present application provides an electric device. The electric device includes the battery according to any one of the embodiments of the second aspect.

BRIEF DESCRIPTION OF THE DRAWINGS

Features, advantages, and technical effects of exemplary embodiments of the present application will be described below with reference to the drawings.

FIG. 1 is a schematic structural diagram of a vehicle according to some embodiments of the present application;

FIG. 2 is an exploded schematic view of a battery according to some embodiments of the present application;

FIG. 3 is a schematic structural diagram of a battery according to some other embodiments of the present application;

FIG. 4 is a schematic structural diagram of a battery cell according to some embodiments of the present application;

FIG. 5 is a schematic cross-sectional view of the battery cell taken along an A-A direction in FIG. 4;

FIG. 6 is a schematic structural diagram of an electrode assembly and a cover plate assembly of a battery cell according to some embodiments of the present application;

FIG. 7 is a schematic partial cross-sectional view of a battery cell at a first through hole according to some embodiments of the present application;

FIG. 8 is a schematic diagram of a first housing wall shown in FIG. 7;

FIG. 9 is a schematic top view of FIG. 7 at a first sealing member.

FIG. 10 is a schematic cross-sectional view of a second sealing member of a battery cell according to some embodiments of the present application;

FIG. 11 is a schematic partial cross-sectional view of a battery cell at a first through hole according to some other embodiments of the present application;

FIG. 12 is a schematic cross-sectional view of a second sealing member of a battery cell according to some other embodiments of the present application;

FIG. 13 is a schematic partial cross-sectional view of a battery cell at a first through hole according to yet some other embodiments of the present application;

FIG. 14 is a schematic partial cross-sectional view of a battery cell at a first through hole according to still some other embodiments of the present application;

FIG. 15 is a schematic diagram of a first housing wall shown in FIG. 14;

FIG. 16 is a schematic partial cross-sectional view of a battery cell at a first through hole according to some other embodiments of the present application;

FIG. 17 is a schematic structural diagram of a support according to some embodiments of the present application;

FIG. 18 is a schematic structural diagram of the insulating support shown in FIG. 17 from another angle; and

FIG. 19 is a schematic cross-sectional view taken along a B-B direction in FIG. 18.

The reference numerals are as follows:

1. vehicle; 2. battery; 3. controller; 4. motor; 5. case; 5a. first case part; 5b. second case part; 5c. accommodating space; 6. battery cell; 7. busbar component;

10. electrode assembly; 11. main body part; 12. first tab; 13. second tab;

20. housing; 20a. first through hole; 20b. second through hole; 20c. accommodating cavity; 21. housing body; 22. cover plate; 23. first housing wall; 231. weak part; 232. second recess; 232a. bottom surface; 232b. step surface; 233. wall main body; 234. first convex wall; 234a. first wall body; 234b. second wall body; 24. second housing wall; 25. housing recess;

30. first electrode lead-out member; 31. adapter member; 32. electrode terminal; 33. terminal plate;

40. second electrode lead-out member;

50. first sealing member; 51. first protrusion; 52. connecting part; 53. first recess;

60. second sealing member; 61. large end; 62. small end; 63. third recess;

70. welded part;

80. support; 80a. drainage recess; 80b. bottom wall; 80c. injection opening; 80d. accommodating recess; 81. support block; 82. insulating substrate; 83. first limiting plate; 84. second limiting plate; 85. third limiting plate;

X. first direction; Z. second direction; Y. third direction.

DETAILED DESCRIPTION

Hereinafter, embodiments of the sodium-ion battery cell, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the present application, the terms "a plurality of" and "multiple" mean two or more.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

In the embodiments of the present application, the battery cell may be a secondary battery. The secondary battery refers to a battery cell that can continue to be used by activating the active material through charging after the battery cell is discharged.

A battery cell generally includes an electrode assembly. The electrode assembly includes a positive electrode and a negative electrode. During the charging and discharging process of the battery cell, active ions (such as lithium ions) are intercalated and deintercalated back and forth between the positive electrode and the negative electrode. Illustratively, the electrode assembly further includes a separator disposed between the positive electrode and the negative electrode, and the separator can prevent a short circuit between the positive electrode and the negative electrode and allow the passage of active ions.

The battery cell may include, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell may be a prismatic battery cell or a battery cell of other shapes. The prismatic battery cell includes a square-shell battery cell, a blade-shaped battery cell, or a polygonal prismatic battery, and the polygonal prismatic battery may be, for example, a hexagonal prismatic battery. The battery cell of other shapes may be a cylindrical battery.

The battery cell may be a hard-case battery cell, a pouch battery cell, or other types of battery cells.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the chassis of the vehicle, or a portion of the case may become at least a portion of a crossmember and a longitudinal member of the vehicle.

In some embodiments, the battery may be an energy storage device. The energy storage device includes an energy storage container, an energy storage electrical cabinet, and the like.

During the production process of a battery cell, it is necessary to inject an electrolyte into the interior of the battery cell. Generally, the electrolyte injection process usually needs to first vacuumize the interior of the battery cell and then inject the electrolyte into the interior of the battery cell by using a pressure difference. The long vacuuming time, the slow electrolyte injection speed, and the poor electrolyte infiltration effect on the electrode assembly affect the production efficiency and the cycle performance of the battery cell.

In view of this, the embodiments of the present application provide a technical solution, in which the housing of the battery cell is provided with the first through hole and the second through hole, such that the electrolyte can be injected into the interior of the battery cell in a normal pressure state, the resistance to electrolyte injection is reduced, the time is saved, and the infiltration effect of the electrolyte on the electrode assembly and the cycle performance of the battery cell are improved.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

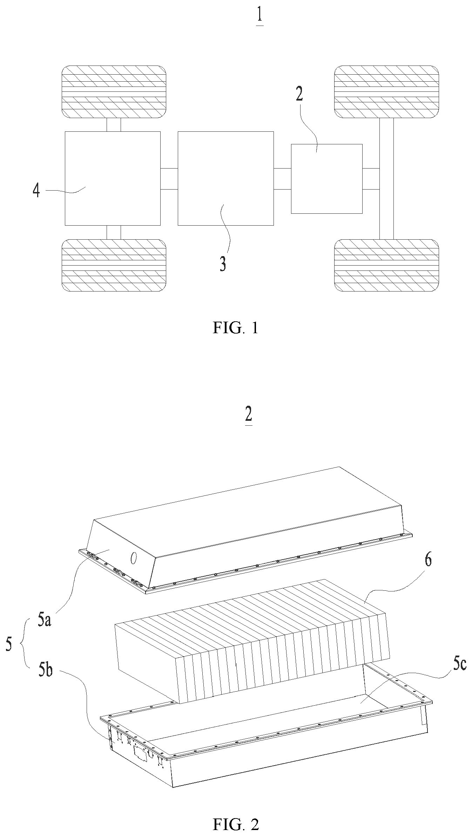

FIG. 1 is a schematic structural diagram of a vehicle according to some embodiments of the present application.

As shown in FIG. 1, a battery 2 is disposed inside a vehicle 1, and the battery 2 may be disposed at the bottom, the head, or the tail of the vehicle 1. The battery 2 may be configured to power the vehicle 1. For example, the battery 2 may serve as an operation power source for the vehicle 1.

The vehicle 1 may further include a controller 3 and a motor 4. The controller 3 is configured to control the battery 2 to supply power to the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, instead of or in part instead of fuel or natural gas, provide driving power for the vehicle 1.

FIG. 2 is an exploded schematic view of a battery according to some embodiments of the present application.

As shown in FIG. 2, the battery 2 includes a case 5 and a battery cell 6 (not shown). The battery cell 6 is accommodated in the case 5.

The case 5 is configured to accommodate the battery cell 6, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell 6. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. The first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further disposed between the first case part 5a and the second case part 5b.

If the first case part 5a lids the top of the second case part 5b, the first case part 5a may also be referred to as an upper case cover, and the second case part 5b may also be referred to as a lower case body.

In the battery 2, one or a plurality of battery cells 6 may be provided. If a plurality of battery cells 6 are provided, the plurality of battery cells 6 may be connected in series, in parallel, or in series-parallel. The series-parallel connection means that both series connection and parallel connection are present in the connection of the plurality of battery cells 6. The plurality of battery cells 6 may be directly connected in series, in parallel, or in series-parallel, and then the whole formed by the plurality of battery cells 6 is accommodated in the case 5. Certainly, the situation may be that the plurality of battery cells 6 are first connected in series, in parallel, or in series-parallel to form battery modules, and then the plurality of battery modules are connected in series, in parallel, or in series-parallel to form a whole and accommodated in the case 5.

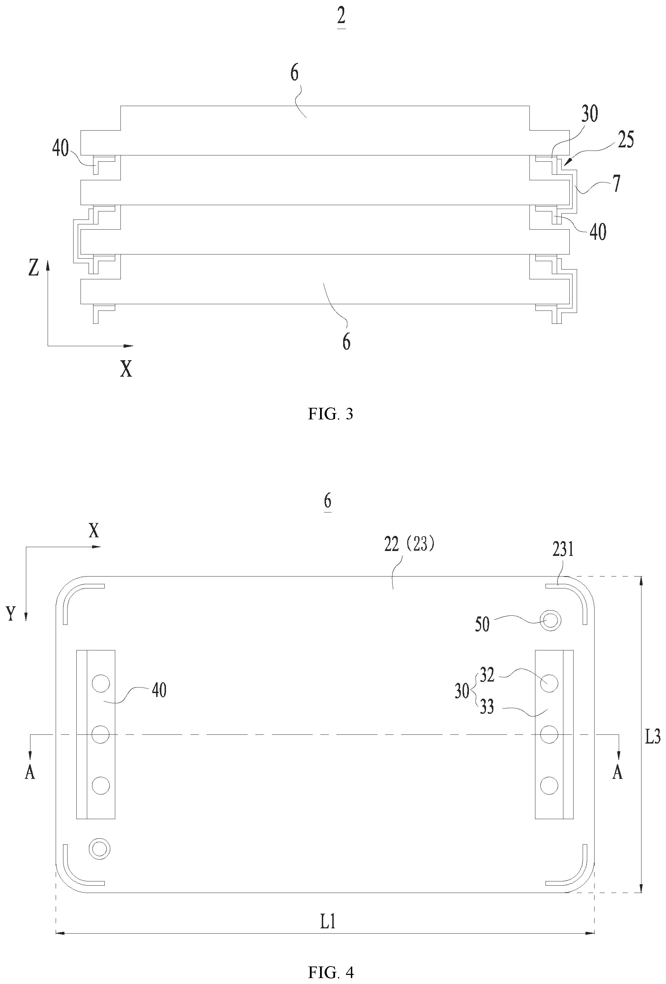

FIG. 3 is a schematic structural diagram of a battery according to some other embodiments of the present application.

As shown in FIG. 3, in some embodiments, the battery 2 includes a plurality of battery cells 6 and a plurality of busbar components 7, and the plurality of busbar components 7 may connect the plurality of battery cells 6 in series, in parallel, or in a series-parallel manner.

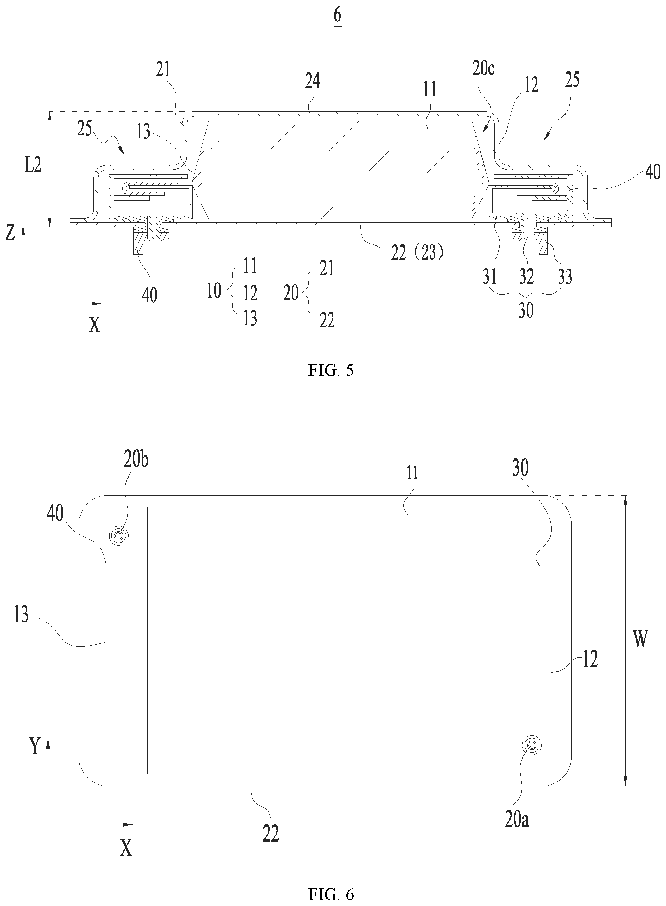

FIG. 4 is a schematic structural diagram of a battery cell according to some embodiments of the present application; FIG. 5 is a schematic cross-sectional view of the battery cell taken along an A-A direction in FIG. 4; and FIG. 6 is a schematic structural diagram of an electrode assembly and a cover plate assembly of a battery cell according to some embodiments of the present application.

Referring to FIGs. 4-6, the embodiments of the present application provide a battery cell 6. The battery cell includes an electrode assembly 10 and a housing 20. The electrode assembly 10 is disposed in the housing 20.

The electrode assembly 10 includes a positive electrode and a negative electrode. During the charging and discharging process of the battery cell 6, active ions (such as lithium ions) are intercalated and deintercalated back and forth between the positive electrode and the negative electrode. Optionally, the electrode assembly 10 further includes a separator disposed between the positive electrode and the negative electrode. The separator can reduce the risk of a short circuit between the positive electrode and the negative electrode and allow the passage of active ions.

In some embodiments, the positive electrode may be a positive electrode plate, and the positive electrode plate may include a positive electrode current collector and a positive electrode active substance layer disposed on at least one surface of the positive electrode current collector.

As an example, the positive electrode current collector is provided with two surfaces opposite to each other in its own thickness direction, and the positive electrode active substance layer is disposed on any one or both of the two opposite surfaces of the positive electrode current collector.

As an example, a metal foil or a composite current collector may be used as the positive electrode current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active substance layer includes a positive electrode active material, and the positive electrode active material may include at least one of the following materials: a lithium-containing phosphate, a lithium transition metal oxide, and respective modified compounds thereof. However, the present application is not limited to these materials, and other conventional materials that can be used as positive electrode active substance layers for batteries may also be used. These positive electrode active substance layers may be used alone or in combination of two or more. Examples of the lithium-containing phosphate may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$), a lithium nickel cobalt aluminum oxide (such as $LiNi_{0.80}Co_{0.15}Al_{0.05}O_2$), and modified compounds thereof.

In some embodiments, a foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active substance layer. Certainly, the positive electrode active substance layer may also be provided. As an example, a lithium source material, a potassium metal, or a sodium metal may also be incorporated into or/and deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in battery cells 6. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

The housing 20 is of a hollow structure. An accommodating space for accommodating the electrode assembly 10 and the electrolyte is formed inside the housing. The shape of the housing 20 may be determined according to the specific shape of the electrode assembly 10. For example, if the electrode assembly 10 is of a rectangular parallelepiped structure, a rectangular parallelepiped housing may be used.

The housing 20 may be made of various materials. For example, the housing 20 may be made of metal or plastic. Optionally, the housing 20 may be made of copper, iron, aluminum, steel, aluminum alloy, or the like. Illustratively, the housing 20 may be a steel housing, an aluminum housing, a plastic housing (such as polypropylene), a composite metal housing (such as a copper-aluminum composite housing), an aluminum-plastic film, or the like.

As an example, the housing 20 includes a housing body 21 and a cover plate 22. The housing body 21 is provided with an opening, and the cover plate 22 is configured to lid the opening.

The housing body 21 is a component configured to form the internal cavity of the battery cell 6 in combination with the cover plate 22. The formed internal cavity may be configured to accommodate the electrode assembly 10, the electrolyte, and other components.

The housing body 21 and the cover plate 22 may be separate components. Illustratively, an opening may be formed in the housing body 21, and the cover plate 22 lids the opening to form the internal cavity of the battery cell 6.

The housing body 21 may be in various shapes and dimensions, such as a rectangular parallelepiped and a hexagonal prism. Specifically, the shape of the housing body 21 may be determined according to the specific shape and dimension of the electrode assembly 10. The housing body 21 may be made of various materials, such as copper, iron, aluminum, stainless steel, and aluminum alloy.

The shape of the cover plate 22 may be adapted to the shape of the housing body 21 to match the housing body 21. The cover plate 22 and the housing body 21 may be made of the same or different materials. Optionally, the cover plate 22 may be made of a material with a certain hardness and strength (for example, copper, iron, aluminum, stainless steel, aluminum alloy, and plastic), such that the cover plate 22 is not easily deformed when being compressed or collided. This provides the battery cell 6 with higher structural strength and improved reliability.

The cover plate 22 may be connected to the housing body 21 by welding, bonding, snap-fitting, or other methods.

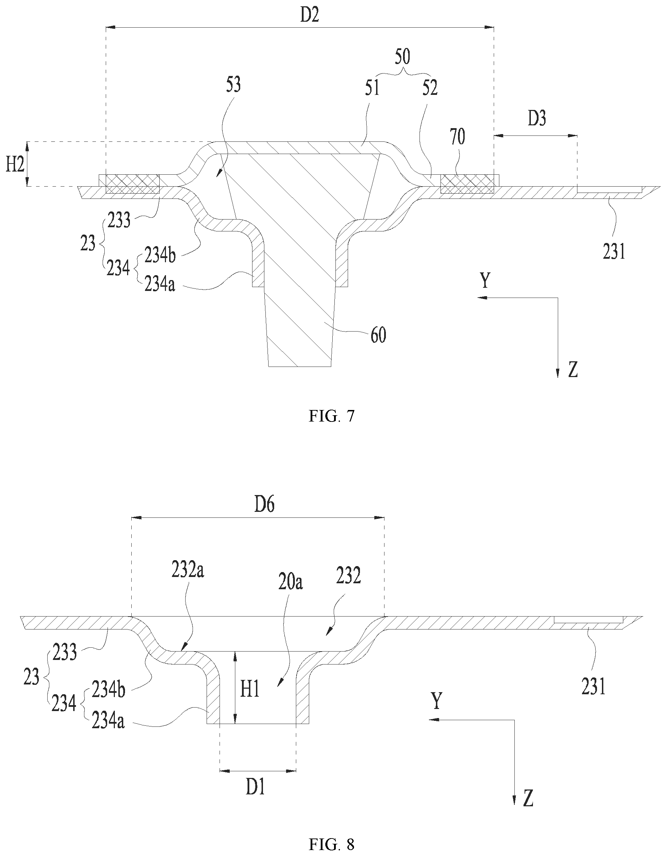

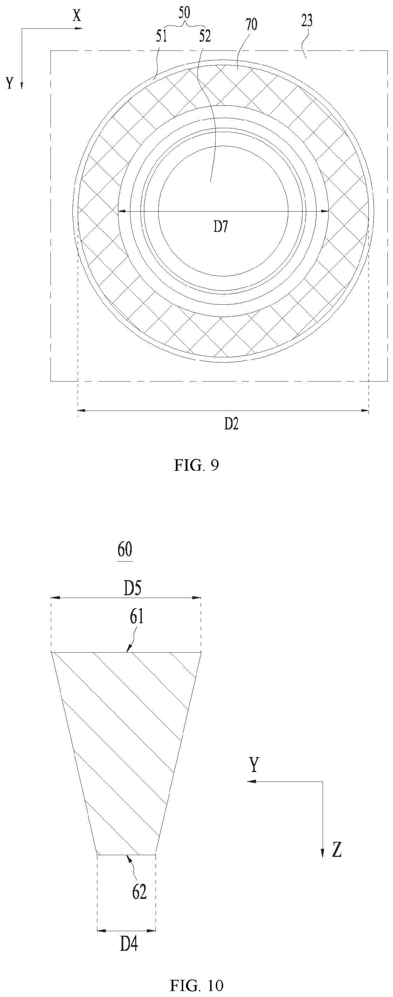

FIG. 7 is a schematic partial cross-sectional view of a battery cell at a first through hole according to some embodiments of the present application; FIG. 8 is a schematic diagram of a first housing wall shown in FIG. 7; and FIG. 9 is a schematic top view of FIG. 7 at a first sealing member.

Referring to FIGs. 4-9, some embodiments of the present application provide a battery cell 6, which includes an electrode assembly 10 and a housing 20. The housing 20 is provided with an accommodating cavity 20c, and the electrode assembly 10 is disposed in the accommodating cavity 20c. The electrode assembly 10 includes a main body part 11 and a first tab 12, and the first tab 12 extends from one end of the main body part 11 in a first direction X. The housing 20 is provided with a first through hole 20a and a second through hole 20b, a portion of the accommodating cavity 20c on a side of the first tab 12 communicates with the first through hole 20a, a portion of the accommodating cavity 20c on a side of the main body part 11 facing away from the first tab 12 communicates with the second through hole 20b, and the first through hole 20a is configured to inject an electrolyte.

The electrode assembly 10 is a component where the electrochemical reaction occurs in the battery cell 6. One or more electrode assemblies 10 may be accommodated in the housing 20. The electrode assembly 10 may be of a wound structure, a stacked structure, a composite wound and stacked structure, or other structures.

The shape of the electrode assembly 10 may be cylindrical, flat, polygonal prismatic, or the like.

As an example, the electrode assembly 10 includes a first electrode plate, a second electrode plate, and a separator. The polarity of the first electrode plate is opposite to the polarity of the second electrode plate. The separator is configured to insulate and isolate the first electrode plate from the second electrode plate.

The first electrode plate includes a first current collector and a first active substance layer applied onto the surface of the first current collector, and the second electrode plate includes a second current collector and a second active substance layer applied onto the surface of the second current collector. The main body part 11 includes a portion of the first current collector coated with the first active substance layer, a portion of the second current collector coated with the second active substance layer, the first active substance layer, and the second active substance layer, and the first tab 12 includes a portion of the first current collector not coated with the first active substance layer.

One of the first electrode plate and the second electrode plate is a positive electrode plate, and the other is a negative electrode plate.

One or a plurality of first through holes 20a may be provided. One or a plurality of second through holes 20b may be provided.

The first through hole 20a may be a circular hole, a square hole, an elliptical hole, or a through hole in another shape. The second through hole 20b may be a circular hole, a square hole, an elliptical hole, or a through hole in another shape. The shape of the first through hole 20a may be the same as or different from the shape of the second through hole 20b.

The hole diameter of the first through hole 20a may be greater than, less than, or equal to the hole diameter of the second through hole 20b.

The axial direction of the first through hole 20a may be parallel to the first direction X, or may intersect with the first direction X. Illustratively, the axial direction of the first through hole 20a may be perpendicular to the first direction X.

Illustratively, two ends of the accommodating cavity 20c in the first direction X respectively communicate with the first through hole 20a and the second through hole 20b. Illustratively, a portion of the accommodating cavity 20c on the side of the main body part 11 facing the first tab 12 communicates with the first through hole 20a.

In the embodiments of the present application, the communication between the first through hole 20a and the accommodating cavity 20c may mean that when the first through hole 20a is not blocked by another component, an external substance (for example, a fluid) fluid may enter the accommodating cavity 20c via the first through hole 20a. Similarly, the fluid in the accommodating cavity 20c may also flow out of the housing 20 via the first through hole 20a. The communication between the second through hole 20b and the accommodating cavity 20c may mean that when the second through hole 20b is not blocked by another component, an external substance (for example, a fluid) fluid may enter the accommodating cavity 20c via the second through hole 20b. Similarly, the fluid in the accommodating cavity 20c may also flow out of the housing 20 via the second through hole 20b.

The first through hole 20a may be configured to inject the electrolyte during the production process of the battery cell 6, and may also be used in other processes in the production of the battery cell 6. Illustratively, during the formation process of the battery cell 6, the gas generated inside the battery cell 6 may also be extracted through the first through hole 20a.

During the production process of the battery cell 6, the electrolyte may be injected into the accommodating cavity 20c through the first through hole 20a. During the process of injecting the electrolyte, the gas in the accommodating cavity 20c may be discharged through the second through hole 20b, such that the electrolyte can be injected into the interior of the battery cell 6 in a normal pressure state, the resistance to electrolyte injection is reduced, and the conventional vacuumizing process is omitted, thereby improving the efficiency. The first through hole 20a and the second through hole 20b respectively communicate with the spaces on two sides of the main body part 11 in the first direction X, such that the electrolyte fully infiltrates the main body part 11 during the flowing process, the infiltration effect of the electrolyte on the electrode assembly 10 is improved, and the cycle performance of the battery cell 6 is improved.

The end surface of the main body part 11 facing the first tab 12 is usually provided with a gap, and the electrolyte may enter the main body part 11 along the gap after flowing into the accommodating cavity 20c via the first through hole 20a, thereby improving the infiltration effect of the electrolyte on the electrode assembly 10.

In some embodiments, after the injection process of the electrolyte is completed, the first through hole 20a and the second through hole 20b may be closed by a sealing member to isolate the accommodating cavity 20c from the space outside the housing 20.

In some embodiments, in the axial direction of the first through hole 20a, neither the first tab 12 nor the main body part 11 overlaps with the first through hole 20a.

The axial direction of the first through hole 20a may refer to a direction parallel to the central axis of the first through hole 20a.

The first tab 12 not overlapping with the first through hole 20a in the axial direction of the first through hole 20a may mean that the projection of the first tab 12 in the axial direction does not overlap with the projection of the first through hole 20a in the axial direction. The main body part 11 not overlapping with the first through hole 20a in the axial direction of the first through hole 20a may mean that the projection of the main body part 11 in the axial direction does not overlap with the projection of the first through hole 20a in the axial direction.

When the electrolyte passes through the first through hole 20a, the flow direction of the electrolyte is generally parallel to the axial direction of the first through hole 20a. In the embodiments of the present application, the risk that the electrolyte directly impacts the main body part 11 and the first tab 12 after flowing out of the first through hole 20a can be reduced, thereby reducing the impact force on the first tab 12 and the main body part 11, reducing the deformation of the first tab 12 and the main body part 11, and improving the reliability of the battery cell 6.

In some embodiments, when the electrolyte is injected, the first direction X may be substantially parallel to the horizontal plane. In this case, the electrolyte is injected into the accommodating cavity 20c through the first through hole 20a, and the second through hole 20b may play a role in stabilizing the air pressure. The embodiments of the present application are convenient for operation.

In some embodiments, when the electrolyte is injected, a certain included angle may be formed between the first direction X and the horizontal plane. For example, the first direction X may be perpendicular to the horizontal plane. In this case, the first through hole 20a is disposed at a lower position, the electrolyte is injected from the first through hole 20a, and the second through hole 20b may play a role in stabilizing the air pressure.

Under the action of gravity, the electrolyte gradually enters the electrode assembly 10 from bottom to top. This process, combined with the capillary action of the gaps between the electrode plates of the electrode assembly 10, improves the infiltration effect of the electrolyte on the electrode assembly 10.

In some embodiments, the main body part 11 further includes a second tab 13, and the first tab 12 and the second tab 13 have opposite polarities. Illustratively, the second tab 13 includes a portion of the second current collector not coated with the second active substance layer.

The second tab 13 and the first tab 12 may extend from the same end of the main body part 11 in the first direction X, or may respectively extend from two ends of the main body part 11 in the first direction X.

In some embodiments, the first tab 12 and the second tab 13 respectively extend from two ends of the main body part 11 in the first direction X to reduce the risk of a short circuit caused by contact between the first tab 12 and the second tab 13.

The second through hole 20b communicates with a space of the accommodating cavity 20c on the side of the main body part 11 facing the second tab 13.

In some embodiments, a dimension of the housing 20 along the first direction X is L1, a dimension of the housing 20 along the second direction Z is L2, a dimension of the housing 20 along the third direction Y is L3, and any two of the first direction X, the second direction Z, and the third direction Y are perpendicular to each other. $1.2 \leq L1/L3 \leq 18$, and $1.2 \leq L3/L2 \leq 15$.

Illustratively, the first direction X may be a length direction of the battery cell 6, the second direction Z may be a thickness direction of the battery cell 6, and the third direction Y may be a width direction of the battery cell 6.

Illustratively, L1 may be the maximum dimension of the housing 20 in the first direction X, L2 may be the maximum dimension of the housing 20 in the second direction Z, and L3 may be the maximum dimension of the housing 20 in the third direction Y.

The first tab 12 is disposed at the end portion of the electrode assembly 10 in the first direction X, which will additionally occupy space in the first direction X. The larger L1 is, the smaller the dimension proportion of the first tab 12 in the first direction X is, and the higher the space utilization rate of the battery cell 6 in the first direction X is. The larger L3 is, the greater the current passage area of the first tab 12 is, the better the current passage capacity of the first tab 12 is, and the lower the heat generation is.

The smaller L2 is, the shorter the path of the electrode assembly 10 for outward heat dissipation is, and the lower the temperature rise of the battery cell 6 during charging and discharging is. However, the smaller L2 is, the thinner the battery cell 6 is, and the battery cell 6 is more likely to deform under external impact during the production, transportation, and use of the battery cell 6.

On the premise that the volume of the battery cell 6 is constant, L1/L3 is defined to be 1.2-18, and L3/L2 is defined to be 1.2-15, such that the space utilization rate of the battery cell 6 in the first direction X and the current passage capacity of the first tab 12 can be balanced, the temperature rise of the battery cell 6 can be reduced, the risk of deformation of the battery cell 6 under external impact can be reduced, and the reliability and the cycle performance of the battery cell 6 can be improved.

Optionally, L1/L3 may be 1.2, 2, 3, 4, 5, 7, 8, 10, 12, 14, 15, 17, or 18.

Optionally, L3/L2 may be 1.2, 2, 3, 4, 5, 7, 8, 10, 12, 14, or 15.

In some embodiments, L1/L3 is 3-7. L3/L2 is 2-7.

In some embodiments, L1 is 10 mm to 3000 mm. Optionally, L1 is 100 mm to 1500 mm. Optionally, L1 is 500 mm to 1000 mm.

As an example, L1 is 10 mm, 50 mm, 100 mm, 300 mm, 400 mm, 500 mm, 600 mm, 1000 mm, 1200 mm, 1500 mm, 2000 mm, 2500 mm, or 3000 mm.

In some embodiments, L3 is 10 mm to 3000 mm. Optionally, L3 is 30 mm to 1000 mm. L3 is 50 mm to 150 mm.

Optionally, L3 is 10 mm, 50 mm, 100 mm, 150 mm, 300 mm, 400 mm, 500 mm, 600 mm, 1000 mm, 1200 mm, 1500 mm, 2000 mm, 2500 mm, or 3000 mm.

In some embodiments, L2 is 5 mm to 1000 mm. Optionally, L2 is 10 mm to 300 mm. Optionally, L2 is 20 mm to 50 mm.

Optionally, L3 is 5 mm, 10 mm, 10 mm, 30 mm, 50 mm, 60 mm, 80 mm, 100 mm, 200 mm, 300 mm, 500 mm, 600 mm, 800 mm, or 1000 mm.

In some embodiments, viewed along the third direction Y, the first through hole 20a and the second through hole 20b are respectively located on two sides of the main body part 11 in the first direction X.

In some embodiments, the housing 20 includes a housing body 21 and a cover plate 22. The housing body 21 is provided with an opening, and the cover plate 22 lids the opening.

The first through hole 20a may be disposed in the housing body 21 or the cover plate 22. The second through hole 20b may be disposed in the housing body 21 or the cover plate 22.

Illustratively, the first through hole 20a and the second through hole 20b are disposed on the cover plate 22, thereby simplifying the forming process of the housing body 21.

In some embodiments, the battery cell 6 further includes a first electrode lead-out member 30 and a second electrode lead-out member 40. The first electrode lead-out member 30 is disposed on the housing 20 and electrically connected to the first tab 12, and the second electrode lead-out member 40 is disposed on the housing 20 and connected to the second tab 13.

The first electrode lead-out member 30 and the second electrode lead-out member 40 may be configured to electrically connect the electrode assembly 10 to the current outside the battery cell 6, thereby achieving the charging and discharging of the battery cell 6.

In some embodiments, the first electrode lead-out member 30 and the second electrode lead-out member 40 are both mounted on the cover plate 22.

In some embodiments, the first electrode lead-out member 30 includes an adapter member 31, an electrode terminal 32, and a terminal plate 33. The terminal plate 33 is located on an outer side of the cover plate 22, the adapter member 31 is disposed in the accommodating cavity 20c and connected to the first tab 12, and the electrode terminal 32 passes through the cover plate 22 and is connected to the adapter member 31 and the terminal plate 33. Illustratively, the terminal plate 33 may be configured to be connected to a busbar component. Optionally, the adapter member 31 and the electrode terminal 32 are of an integral structure.

In some embodiments, the cover plate 22, the first electrode lead-out member 30, the second electrode lead-out member 40, and other components may be assembled into a cover plate assembly in advance, then the cover plate assembly is connected to the electrode assembly 10, and then the housing body 21 lids the cover plate 22 and is connected to the cover plate 22 and the housing body 21.

In some embodiments, the second through hole 20b is configured to inject the electrolyte. The first through hole 20a and the second through hole 20b are configured to inject the electrolyte at the same time, which can improve the electrolyte injection efficiency.

In some embodiments, the minimum hole diameter of the second through hole 20b is less than or equal to the minimum hole diameter of the first through hole 20a.

Illustratively, for a non-circular through hole, if the area of a certain cross section (i.e., the area of a certain cross section perpendicular to the axial direction of the through hole) is K, then the hole diameter of the non-circular hole at the cross section is as follows:

$$2 \times \sqrt{K/\pi}.$$

Correspondingly, the minimum hole diameter of the non-circular through hole is the hole diameter calculated based on the area of the minimum cross section.

It may be understood that terms such as a diameter, an inner diameter, and an outer diameter described below are also applicable to a non-circular structure. The diameter, inner diameter, outer diameter, and the like of the non-circular structure may also be calculated using the area in the above-described manner.

In some embodiments, the minimum hole diameter of the second through hole 20b is equal to the minimum hole diameter of the first through hole 20a. Optionally, the shape and dimension of the second through hole 20b are the same as those of the first through hole 20a. In this way, the first through hole 20a

and the second through hole 20b are interchangeable, and the external device may not only inject the electrolyte into the accommodating cavity 20c through the first through hole 20a, but also inject the electrolyte into the accommodating cavity 20c through the second through hole 20b.

In some embodiments, the minimum hole diameter of the second through hole 20b is less than the minimum hole diameter of the first through hole 20a. During the liquid injection process, the second through hole 20b is configured to discharge gas to stabilize the gas pressure. The gas has stronger fluidity than the liquid, so the hole diameter of the second through hole 20b can be reduced to reduce the loss of strength of the housing 20.

In some embodiments, the first through hole 20a and the second through hole 20b are disposed diagonally to enhance the electrolyte infiltration into the electrode assembly 10.

Illustratively, the housing 20 is provided with four corners, and the first through hole 20a and the second through hole 20b are respectively disposed at two opposite corners.

In some embodiments, the housing 20 includes a first housing wall 23 and a second housing wall 24 oppositely disposed in a second direction Z, the main body part 11 is located between the first housing wall 23 and the second housing wall 24, and the second direction Z is parallel to the thickness direction of the battery cell 6 and perpendicular to the first direction X.

The first housing wall 23 is a wall having a certain thickness of the housing 20, and the second housing wall 24 is a wall having a certain thickness of the housing 20. The first housing wall 23 and the second housing wall 24 are spaced apart from each other in the second direction Z.

The first housing wall 23 may be of various shapes, such as circular, rectangular, square, or other shapes. The second housing wall 24 may be of various shapes, such as circular, rectangular, square, or other shapes.

The first housing wall 23 may be a flat wall or a curved wall. The second housing wall 24 may be a flat wall or a curved wall.

Illustratively, the area of the second housing wall 24 may be equal to the area of the first housing wall 23. For example, the shapes and dimensions of the second housing wall 24 and the first housing wall 23 are the same. Alternatively, the area of the second housing wall 24 may also be less than the area of the first housing wall 23.

The first through hole 20a may be disposed in the first housing wall 23 or the second housing wall 24. The second through hole 20b may be disposed in the first housing wall 23, the second housing wall 24, or another housing wall of the housing 20.

In some embodiments, the cover plate 22 includes a first housing wall 23, and the housing body 21 includes a second housing wall 24.

In some embodiments, the first housing wall 23 is a flat wall, and the first through hole 20a is disposed in the first housing wall 23. The first housing wall 23 is located on one side of the electrode assembly 10 in the thickness direction, and is relatively flat and has a relatively large area, which facilitates the arrangement of the first through hole 20a.

In some embodiments, the axial direction of the first through hole 20a is parallel to the second direction Z.

In some embodiments, the first through hole 20a and the second through hole 20b are both disposed in the first housing wall 23. Optionally, the first through hole 20a and the second through hole 20b are respectively disposed at two opposite corners of the first housing wall 23, such that the first through hole 20a and the second through hole 20b are disposed diagonally.

In some embodiments, the minimum hole diameter of the first through hole 20a is D1, the dimension of the first housing wall 23 along a third direction Y is W, and the third direction Y is perpendicular to the first direction X and the second direction Z. $0.02 \leq D1/W \leq 0.2$.

The hole diameter may refer to the diameter of the hole.

D1 is positively correlated with the electrolyte injection efficiency. W is related to the difference in the electrolyte infiltration into the electrode assembly 10. For example, the larger W is, the larger the maximum distance between the first through hole 20a and an edge of the first housing wall 23 in the third direction Y is; and the closer to the first through hole 20a, the easier it is to be infiltrated.

In addition, providing the first through hole 20a may affect the strength of the first housing wall 23. Larger D1 indicates lower strength of the first housing wall 23 at the first through hole 20a.

In the embodiments of the present application, D1/W is defined to be greater than or equal to 0.02, so as to improve the electrolyte injection efficiency and improve the consistency of electrolyte infiltration into the electrode assembly 10. In the embodiments of the present application, D1/W is defined to be less than or equal to 0.2, so as to reduce the strength damage of the first housing wall 23 at the first through hole 20a, reduce the risk of cracking of the first housing wall 23 when the battery cell 6 is subjected to external impact, and improve the reliability.

As an example, D1/W may be 0.02, 0.03, 0.04, 0.05, 0.06, 0.08, 0.1, 0.12, 0.14, 0.15, 0.18, or 0.2.

In some embodiments, D1/W is 0.04-0.1.

In some embodiments, W may be the dimension of the cover plate 22 along the third direction Y.

In some embodiments, W may be equal to L3.

In some embodiments, $2 \text{ mm} \leq D1 \leq 10 \text{ mm}$. Optionally, D1 is 2 mm, 3 mm, 4 mm, 5 mm, 6 mm, 7 mm, 8 mm, 9 mm, or 10 mm.

In the embodiments of the present application, D1 is defined to be greater than or equal to 2 mm, so as to improve the electrolyte injection efficiency, and D1 is defined to be less than or equal to 10 mm, so as to reduce the strength loss of the first housing wall 23 and reduce the requirements for the liquid injection device.

In addition, by defining D1 to be greater than or equal to 2 mm, the current passage area of the first through hole 20a can be increased, such that the flow velocity of the electrolyte can be reduced when the electrolyte injection speed meets the requirements, the impact force of the electrolyte on the main body part 11 can be reduced, the deformation of the main body part 11 can be reduced, and the reliability of the battery cell 6 can be improved.

In some embodiments, D1 is 3 mm to 8 mm. Optionally, D1 is 5 mm to 7 mm.

In some embodiments, the battery cell 6 further includes a first sealing member 50. The first sealing member 50 is connected to the housing 20 and configured to seal the first through hole 20a.

The first sealing member 50 is configured to seal the first through hole 20a to reduce the risk of the accommodating cavity 20c communicating with the external space of the battery cell 6 via the first through hole 20a.

The first sealing member 50 may be inserted into the first through hole 20a, or may be located on an outer side of the first through hole 20a as a whole.

The first sealing member 50 may be connected to the housing 20 by welding, bonding, snap-fitting, or other methods to seal the first through hole 20a.

The first sealing member 50 may be a plate-like structure, a columnar structure, or another structure.

The material of the first sealing member 50 may include metal, rubber, or other materials.

In the embodiments of the present application, by providing the first sealing member 50 to seal the first through hole 20a, the risk of electrolyte leakage via the first through hole 20a is reduced, and the reliability of the battery cell 6 is improved.

In some embodiments, the first through hole 20a is disposed in the first housing wall 23, and the first sealing member 50 is connected to the first housing wall 23.

In some embodiments, in the second direction Z, the projection of the first through hole 20a is located within the projection of the first sealing member 50.

In some embodiments, the first sealing member 50 includes a first protrusion 51 and a connecting part 52 disposed around the first protrusion 51. The connecting part 52 is located on an outer side of the housing 20 and connected to the housing 20, and the first protrusion 51 protrudes from the surface of the connecting part 52 facing away from the housing 20.

The first protrusion 51 may be of a solid structure, or may be of a hollow structure.

The first protrusion 51 may function as a reinforcing rib to improve the strength of the housing 20 at the first through hole 20a, reduce the risk of cracking of the housing 20 around the first through hole 20a when the battery cell 6 is subjected to an external impact, and improve the reliability of the battery cell 6.

In some embodiments, the connecting part 52 is located on an outer side of the first housing wall 23 and connected to the first housing wall 23. The first protrusion 51 protrudes from the surface of the connecting part 52 facing away from the first housing wall 23 in the second direction Z.

In some embodiments, the first sealing member 50 is provided with a first recess 53 at a position corresponding to the first protrusion 51, and the first recess 53 is recessed relative to the surface of the connecting part 52 facing the housing 20.

By providing the first recess 53, the weight of the first sealing member 50 can be reduced, and the energy density of the battery cell 6 can be improved.

Illustratively, the first recess 53 is recessed relative to the surface of the connecting part 52 facing the first housing wall 23.

Illustratively, the first sealing member 50 may be manufactured by stamping a plate-like structure. The stamped positions of the plate-like structure form the first protrusion 51 and the first recess 53.

In some embodiments, by providing the first sealing member 50 provided with the first protrusion 51, the overall strength of the housing 20 may be improved, and the hole diameter of the first through hole 20a may be appropriately increased to improve the injection efficiency of the electrolyte.

In some embodiments, in the axial direction of the first through hole 20a, the dimension H2 of the first protrusion 51 protruding from the outer surface of the first housing wall 23 satisfies: $0.5 \text{ mm} \leq H2 \leq 2 \text{ mm}$.

Optionally, H2 is 0.5 mm, 0.8 mm, 1 mm, 1.2 mm, 1.5 mm, 1.8 mm, or 2 mm.

In the embodiments of the present application, H2 is defined to be greater than or equal to 0.5 mm to enhance the strength of the first sealing member 50, compensate for the strength of the housing 20, reduce the risk of cracking of the housing 20, and improve the reliability of the battery cell 6. H2 is defined to be less than or equal to 2 mm to reduce the additional space occupied by the first sealing member 50 in the axial direction of the first through hole 20a and reduce the loss of energy density of the battery cell 6.

In some embodiments, in the second direction Z, the dimension of the first protrusion 51 protruding from the outer surface of the first housing wall 23 is H2.

In some embodiments, the battery cell 6 further includes a second sealing member 60, and a portion of the second sealing member 60 is inserted into the first through hole 20a.

The second sealing member 60 and the first sealing member 50 can play a double-layer sealing role, thereby improving the sealing performance, reducing the risk of electrolyte leakage, and improving the reliability of the battery cell 6.

In some embodiments, the second sealing member 60 is detachably connected to the first housing wall 23.

The second sealing member 60 may play a role in temporary sealing during the production process of the battery cell 6. Illustratively, after the electrolyte injection process is completed, the second sealing member 60 may be inserted into the first through hole 20a to seal the first through hole 20a, and then the battery cell 6 is transferred to other stations. When the first through hole 20a needs to be used again (for example, during the chemical formation process, the gas generated by a side reaction inside the battery cell 6 may be extracted through the first through hole 20a), the second sealing member 60 may be removed, and then the battery cell 6 may be processed.

When all processes related to the first through hole 20a are completed, the first sealing member 50 is mounted on the first housing wall 23.

In some embodiments, a portion of the second sealing member 60 is inserted into the first through hole 20a, and another portion of the second sealing member 60 is accommodated in the first recess 53.

The first recess 53 can not only form a clearance for the second sealing member 60, but also limit and fix the second sealing member 60, thereby reducing the risk of loosening of the second sealing member 60 when the battery cell 6 is subjected to external impacts, and improving the sealing performance and the reliability of the battery cell 6.

In some embodiments, an outer side of the housing 20 is provided with a housing recess 25.

By providing the housing recess 25, the volume of the battery cell 6 can be reduced, and the energy density can be improved.

In some embodiments, in the second direction Z, the first sealing member 50 is located on the side of the housing 20 facing away from the housing recess 25.

When the plurality of battery cells 6 are disposed in the second direction Z, the housing recess 25 of one battery cell 6 can form a clearance for the first sealing member 50 of another battery cell 6, thereby improving the space utilization rate and improving the energy density of the battery.

In some embodiments, the housing recess 25 is recessed relative to the surface of the second housing wall 24 facing away from the main body part 11. Optionally, in the second direction Z, the projection of the first sealing member 50 is located within the projection of the housing recess 25.

In some embodiments, the battery cell 6 is provided with two housing recesses 25, and the two housing recesses 25 are respectively located on two sides of the second housing body 21 in the first direction X.

In some embodiments, in the second direction Z, the projection of a portion of the first electrode lead-out member 30 on an outer side of the first housing wall 23 is located within the projection of one housing recess 25, and the projection of a portion of the second electrode lead-out member 40 on an outer side of the first housing wall 23 is located within the projection of the other housing recess 25.

Illustratively, when two battery cells 6 are disposed in the second direction Z, two housing recesses 25 of one battery cell 6 may respectively form a clearance for the first electrode lead-out member 30 and the second electrode lead-out member 40 of the other battery cell 6.

In some embodiments, the second through hole 20b is disposed in the first housing wall 23. Illustratively, the axial direction of the second through hole 20b is parallel to the second direction Z.

In some embodiments, in the second direction Z, the projection of the first through hole 20a is located within the projection of a bottom wall of one housing recess 25, and the projection of the second through hole 20b is located within the projection of a bottom wall of the other housing recess 25.

In some embodiments, the first sealing member 50 is welded to the housing 20 and forms a welded part 70. Welding can enhance the connection strength of the first sealing member 50 to the housing 20 and improve the sealing performance.

Illustratively, the first sealing member 50 is connected to the first housing wall 23 by laser welding, and forms a welded part 70.

In some embodiments, the housing 20 is provided with a pressure relief mechanism. One or a plurality of pressure relief mechanisms may be provided.

The pressure relief mechanism has an important influence on the reliability of the battery cell 6. For example, in the case of a short circuit, overcharging, or the like, thermal runaway may occur within the battery cell 6, resulting in a rapid increase in pressure. In this case, the internal pressure can be relieved outward by activating the pressure relief mechanism, so as to reduce the risk of explosion and fire of the battery cell 6.

The pressure relief mechanism refers to an element or a component that is actuated to relieve the internal pressure when the internal pressure of the battery cell 6 reaches a preset threshold. The designed threshold varies according to different design requirements. The threshold may depend on the material of one or more of the positive electrode plate, the negative electrode plate, the electrolyte, and the separator in the battery cell 6.

In some embodiments, the first housing wall 23 is provided with a pressure relief mechanism.

In some examples, the first housing wall 23 and the pressure relief mechanism may be an integrally formed structure. In an alternative example, the pressure relief mechanism and the first housing wall 23 are independently formed members, and the two may be connected by welding, bonding, or other methods. For example, the first housing wall 23 is provided with a pressure relief hole, the pressure relief hole penetrates through the first housing wall 23, and the pressure relief mechanism is mounted on the first housing wall 23 and covers the pressure relief hole to separate the spaces on the inner and outer sides of the first housing wall 23.

In some embodiments, the first housing wall 23 is integrally formed with the pressure relief mechanism.

In some embodiments, the first housing wall 23 is provided with a weak part 231. Illustratively, a pressure relief mechanism is formed on the first housing wall 23 by providing the weak part 231.

The strength of the weak part 231 is less than that of other parts of the first housing wall 23. The weak part 231 is a part that is prone to fracture, breakage, tearing, or opening.

In some examples, a groove, a score, or other structures may be provided in a predetermined zone of the first housing wall 23 to reduce the local strength of the first housing wall 23, thereby forming the weak part 231 on the first housing wall 23. For example, a predetermined zone of the first housing wall 23 is subjected to thinning processing, and the thinned portion of the first housing wall 23 forms the weak part 231. In some other examples, a predetermined zone of the first housing wall 23 is subjected to material processing, such that the strength of this zone is weaker than the strength of other zones. In other words, this zone is the weak part 231.

In the event of thermal runaway of the battery cell 6, the weak part 231 may be broken under the action of the internal pressure or the temperature of the battery cell 6 to form a channel for relieving the internal pressure, thereby timely relieving the pressure, reducing the risk of fire and explosion of the battery cell 6, and improving the reliability of the battery cell 6.

In some embodiments, four weak parts 231 may be provided, and the four weak parts 231 may be respectively disposed at four corners of the first housing wall 23.

In some embodiments, the housing 20 is provided with a weak part 231, and the minimum distance D3 between the welded part 70 and the weak part 231 is greater than or equal to 1 mm.

During welding, heat is conducted to the surrounding area of the molten pool, creating a heat-affected zone. In the embodiments of the present application, D3 is defined to be greater than or equal to 1 mm, so as to reduce the influence of the heat-affected zone on the weak part 231, reduce the thermal stress on the weak part 231 after welding, reduce the risk of fracture failure of the weak part 231, and improve the reliability of the battery cell 6.

Optionally, D3 is 1 mm, 2 mm, 3 mm, 4 mm, 5 mm, or 10 mm.

Illustratively, D3 is greater than or equal to 2 mm.

In some embodiments, the area of the welded part 70 is S1, the area of a minimum cross section of the first through hole 20a perpendicular to the axial direction thereof is S2, and $1.5 \leq S1/S2 \leq 5$.

Illustratively, $S2 = \pi \times (D1/2)^2$.

The larger S2 is, the higher the requirements for the connection strength between the first sealing member 50 and the housing 20 are, that is, the higher the requirements for S1 are. Certainly, the larger S1 is, the higher the risk of the welded part 70 thermally affecting other structures is.

In view of this, in the embodiments of the present application, S1/S2 is defined to be greater than or equal to 1.5, so as to enhance the connection strength between the first sealing member 50 and the housing 20, improve the structural strength of the battery cell 6 around the first through hole 20a, and reduce the risk of cracking of the housing 20 around the first through hole 20a. In the embodiments of the present application, S1/S2 is defined to be less than or equal to 5 to limit the heat-affected zone generated by welding and reduce the risk of failure of other structures (such as the weak part 231 and the first electrode lead-out member 30) of the battery cell 6 under the action of thermal stress.

Optionally, S1/S2 is 1.5, 2, 2.5, 3, 3.5, 4, 4.5, or 5.

Optionally, S1/S2 is 2.5-4.

In some embodiments, the welded part 70 is annular. The annular welded part 70 may act as a seal to reduce the risk that external impurities enter the first through hole 20a from a gap between the first sealing member 50 and the first housing wall 23.

Illustratively, the outer diameter of the welded part 70 is D2, and the inner diameter of the welded part 70 is D7. $S1 = \pi \times (D2/2)^2 - \pi \times (D7/2)^2$.

In some embodiments, the outer diameter of the welded part 70 is D2, the minimum hole diameter of the first through hole 20a is D1, and $1.6 \leq D2/D1 \leq 2.5$.

In the embodiments of the present application, D2/D1 is defined to be greater than or equal to 1.6, so as to enhance the strength of the welded part 70, improve the structural strength of the battery cell 6 around the first through hole 20a, and reduce the risk of cracking of the housing 20 around the first through hole 20a. In the embodiments of the present application, D2/D1 is defined to be less than or equal to 2.5 to limit the heat-affected zone generated by welding and reduce the risk of failure of other structures of the battery cell 6 under the action of thermal stress.

Optionally, D2/D1 is 1.6, 1.8, 2, 2.2, 2.4, or 2.5.

Optionally, D2/D1 is 1.8-2.2.

In some embodiments, the housing 20 is provided with a second recess 232, and the first through hole 20a extends inward from a bottom surface 232a of the second recess 232. Illustratively, the first through hole 20a extends inward from the bottom surface 232a of the second recess 232 in the second direction Z.

When the electrolyte is injected, the bottom surface 232a of the second recess 232 may play a positioning role, and the injection device may abut against the bottom surface 232a of the second recess 232 to reduce outward sputtering of the electrolyte.

In some embodiments, the housing 20 includes a first housing wall 23. The first housing wall 23 includes a wall main body 233 and a first convex wall 234, and at least a portion of the first convex wall 234 protrudes from the surface of the wall main body 233 facing the main body part 11 and is located on one side of the main body part 11 in the first direction X. The first convex wall 234 includes a first wall body 234a configured to define the first through hole 20a.

By providing the first convex wall 234 that protrudes inward, the depth of the first through hole 20a can be increased, the structural strength of the first housing wall 23 around the first through hole 20a can be improved, and the deformation of the first housing wall 23 can be reduced.

In some embodiments, the projection of the main body part 11 in the second direction Z is located within the projection of the wall main body 233 in the second direction Z.

In some embodiments, the wall main body 233 has a flat-plate shape.

In some embodiments, the thickness direction of the wall main body 233 is parallel to the second direction Z.

In some embodiments, the projection of the first wall body 234a in the first direction X is located within the projection of the main body part 11 in the first direction X.

In some embodiments, the dimension of the first wall body 234a along the second direction Z is H1, the minimum hole diameter of the first through hole 20a is D1, and $0.2 \leq H1/D1 \leq 1$. The second direction is parallel to a thickness direction of the wall main body.

In the embodiments of the present application, H1/D1 is defined to be greater than or equal to 0.2 to enhance the structural strength and the stability of the first wall body 234a and reduce the risk of deformation and cracking of the first wall body 234a. In the embodiments of the present application, H1/D1 is defined to be less than or equal to 1 to reduce the occupation of the first wall body 234a on the internal space of the housing 20, reduce the resistance of the electrolyte to flow in the housing 20, and improve the liquid injection efficiency.

Optionally, H1/D1 is 0.2, 0.3, 0.4, 0.5, 0.6, 0.7, 0.8, 0.9, or 1.

Optionally, H1/D1 is 0.3-0.6.

In some embodiments, H1 is 0.5 mm to 10 mm. Optionally, H1 is 1 mm to 5 mm.

As an example, H1 is 0.5 mm, 1 mm, 1.5 mm, 2 mm, 3 mm, 5 mm, 6 mm, 8 mm, or 10 mm.

In some embodiments, the battery cell 6 further includes a second sealing member 60, and at least a portion of the second sealing member 60 is inserted into the first through hole 20a and detachably connected to the first convex wall 234.

The second sealing member 60 may be configured to seal the first through hole 20a to improve the sealing performance of the battery cell 6. The second sealing member 60 can be disassembled and assembled multiple times during the production process of the battery cell 6, so as to facilitate multiple processing processes of the battery cell 6 through the first through hole 20a. The first convex wall 234 has a relatively large dimension in the second direction Z, and the second sealing member 60 is connected to the first convex wall 234, such that the connection strength can be improved.

In some embodiments, the second sealing member 60 is in interference fit with the first through hole 20a. The interference fit manner can not only effectively seal the first through hole 20a, but also facilitate disassembly and assembly of the second sealing member 60.

In some embodiments, the second sealing member 60 is made of an elastic material. Optionally, the material of the second sealing member 60 includes rubber.

In some embodiments, the first through hole 20a and the second through hole 20b have the same structure.

Illustratively, the first housing wall 23 further includes a second convex wall (not shown), and at least a portion of the second convex wall is configured to define the second through hole 20b. Illustratively, the structure of the second convex wall is the same as that of the first convex wall 234.

Illustratively, the battery cell 6 further includes a third sealing member (not shown) and a fourth sealing member (not shown) that are configured to seal the second through hole 20b. Optionally, the structure of the third sealing member may be the same as that of the first sealing member 50, and the structure of the fourth sealing member may be the same as that of the second sealing member 60.

FIG. 10 is a schematic cross-sectional view of a second sealing member of a battery cell according to some embodiments of the present application.

In some embodiments, referring to FIGs. 7-10, the second sealing member 60 is provided with a large end 61 and a small end 62 oppositely disposed in the axial direction of the first through hole, and the small end 62 is located on the inner side of the large end 61. The ratio of the diameter D4 of the small end 62 to the minimum hole diameter D1 of the first through hole 20a is 0.95-1.05, and the diameter D5 of the large end 61 is greater than the maximum hole diameter of the first through hole 20a.

In the embodiments of the present application, the large end 61 is not required to be the portion of the second sealing member 60 with the largest diameter, as long as the diameter of the large end is greater than the diameter of the small end 62. Similarly, the small end 62 is not required to be the portion of the second sealing member 60 with the smallest diameter.

In the embodiments of the present application, D4/D1 is defined to be 0.95-1.05 to facilitate the insertion of the second sealing member 60 into the first through hole 20a. The large end 61 of the second sealing member 60 has a relatively large dimension, which can reduce the risk of the second sealing member 60 falling into the accommodating cavity 20c through the first through hole 20a, effectively cover the first through hole 20a, and improve the sealing performance.

In some embodiments, D5/D1 is 1.15-1.4.

In some embodiments, H1 is greater than or equal to 1 mm to increase the contact dimension between the second sealing member 60 and the first wall body 234a in the second direction Z and improve the stability of the second sealing member 60.

In some embodiments, the second sealing member 60 has a truncated cone shape. Optionally, the taper of the second sealing member 60 is 9-20, thereby reducing the difficulty of inserting the second sealing member 60 into the first through hole 20a and improving the interference effect between the second sealing member 60 and the first through hole 20a.

In some embodiments, the large end 61 of the second sealing member 60 is accommodated in the first recess 53 of the first sealing member 50. The first recess 53 may limit the large end 61 of the second sealing member 60, limit the loosening of the second sealing member 60, and reduce the risk of interference failure between the second sealing member 60 and the first through hole 20a.

In some embodiments, an edge of the large end 61 of the second sealing member 60 is provided with a chamfer to match a chamfer of an edge of the first recess 53.

In some embodiments, the first sealing member 50 compresses the second sealing member 60 in the second direction Z.

In some embodiments, the first sealing member 50 is located on the outer side of the wall main body 233. The connecting part 52 of the first sealing member 50 is attached to the outer surface of the wall main body 233.

In some embodiments, the first convex wall 234 further includes a second wall body 234b, the second wall body 234b is disposed around the first wall body 234a and connected to the wall main body 233 and the first wall body 234a, the second wall body 234b protrudes inward from the wall main body 233 and is configured to define the second recess 232, the second recess 232 is recessed from the outer surface of the wall main body 233, and the first through hole 20a extends inward from the bottom surface 232a of the second recess 232. At least a portion of the second sealing member 60 is accommodated in the second recess 232.

The second wall body 234b forms a structure that is convex inside and concave outside, which can enhance the strength of the first housing wall 23 and reduce the risk of deformation and cracking of the first housing wall 23. The second recess 232 may further accommodate a portion of the second sealing member 60, so as to reduce the additional space occupied by the second sealing member 60 in the axial direction of the first through hole, thereby improving the space utilization rate.

In some embodiments, an end portion of the first wall body 234a connected to the second wall body 234b is bent into an arc-shaped structure to disperse the stress during the forming process of the first convex wall 234.

In some embodiments, in any direction perpendicular to the second direction Z, the minimum distance between the second recess 232 and the weak part 231 is greater than or equal to 2 mm.

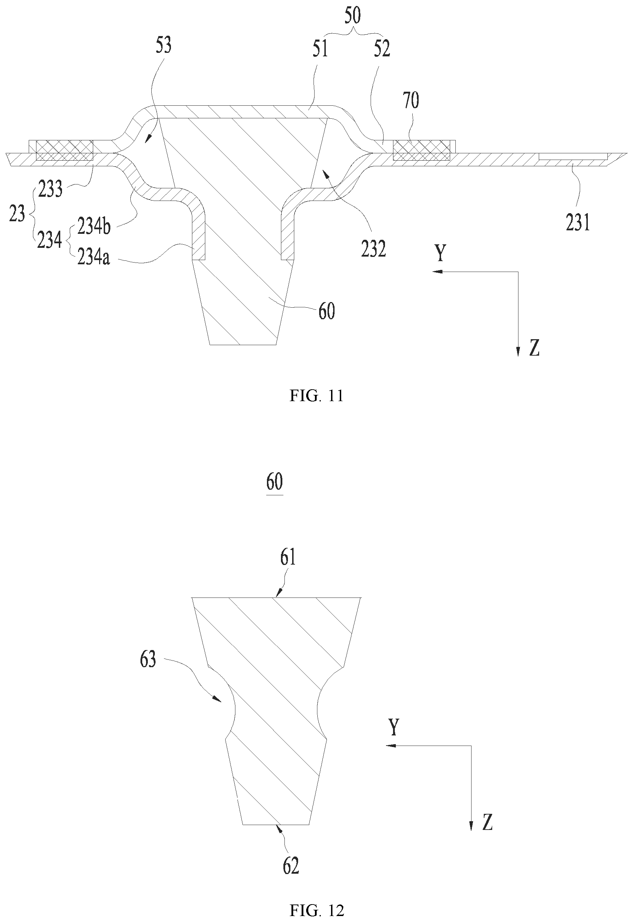

FIG. 11 is a schematic partial cross-sectional view of a battery cell at a first through hole according to some other embodiments of the present application; and FIG. 12 is a schematic cross-sectional view of a second sealing member of a battery cell according to some other embodiments of the present application.

Referring to FIGs. 11 and 12, in some embodiments, the outer periphery of the second sealing member 60 is provided with an annular third recess 63, and at least a portion of the first wall body 234a is accommodated in the third recess 63.

The first wall body 234a may be embedded in the third recess 63 and form a riveting structure with the second sealing member 60, such that the first wall body 234a can limit the movement of the second sealing member 60 in the second direction Z, thereby improving the stability of the second sealing member 60 and improving the sealing performance.

In some embodiments, the bottom surface of the third recess 63 is attached to the first wall body 234a.

In some embodiments, after the second sealing member 60 is inserted into the first through hole 20a, the third recess 63 may be deformed under the pressure of the first wall body 234a.

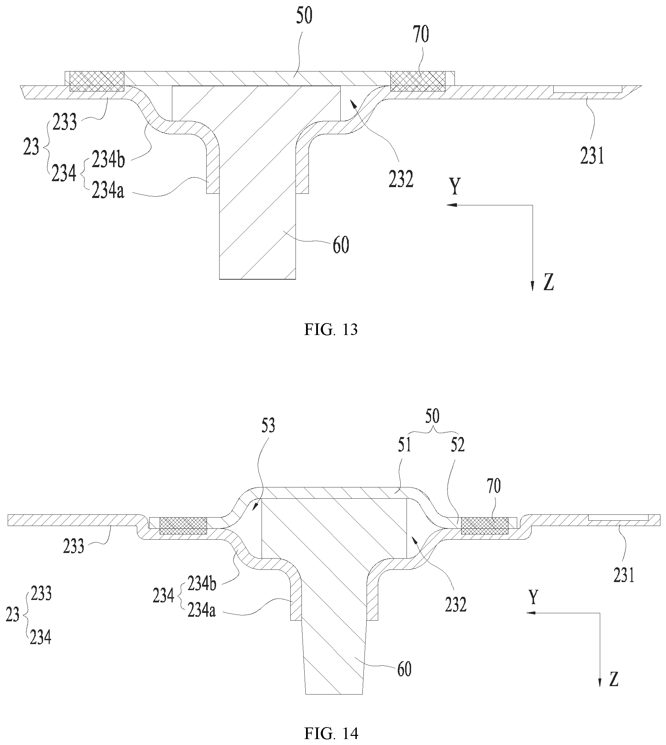

FIG. 13 is a schematic partial cross-sectional view of a battery cell at a first through hole according to yet some other embodiments of the present application.

As shown in FIG. 13, in some embodiments, the first sealing member 50 may be a flat plate structure. The flat plate structure can reduce the space occupied by the first sealing member 50 in the second direction Z, and simplify the forming process of the first sealing member 50.

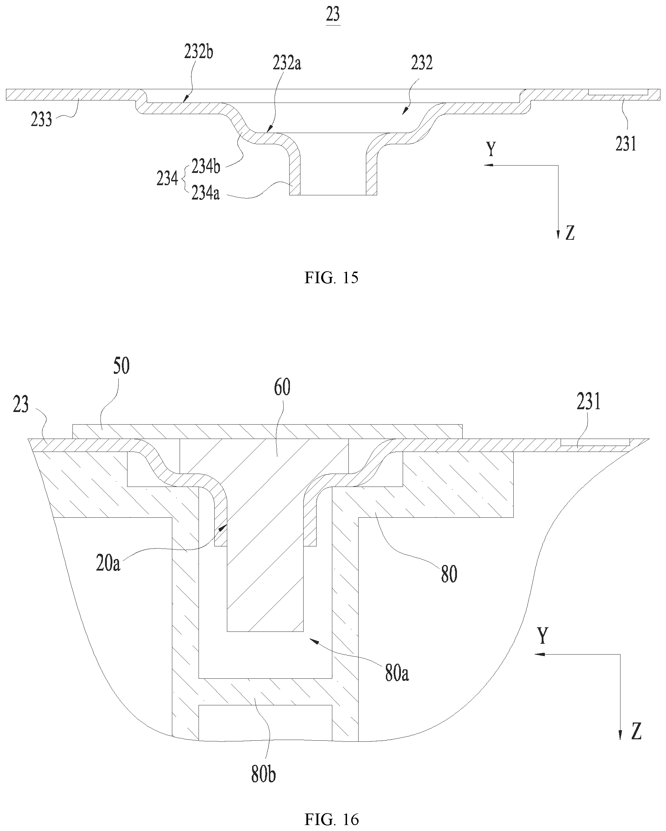

FIG. 14 is a schematic partial cross-sectional view of a battery cell at a first through hole according to still some other embodiments of the present application; and FIG. 15 is a schematic diagram of a first housing wall shown in FIG. 14.

As shown in FIGs. 14 and 15, in some embodiments, at least a portion of the first sealing member 50 is configured to be accommodated in the second recess 232.

When the first sealing member 50 is assembled, the second recess 232 can play a positioning role, thereby simplifying the assembly process of the first sealing member 50. By providing the second recess 232, the additional space occupied by the first sealing member 50 in the axial direction of the first through hole can also be reduced, thereby improving the space utilization rate.

In some embodiments, the second wall body 234b is provided with a step surface 232b, and in the axial direction of the first through hole, the step surface 232b is closer to the outer surface of the wall main body 233 than the bottom surface 232a of the second recess 232. The projection of the step surface 232b in the axial direction of the first through hole surrounds the projection of the bottom surface 232a of the second recess 232 in the axial direction of the first through hole. At least a portion of the first sealing member 50 is accommodated in the second recess 232 and abuts against the step surface 232b.

By providing the step structure, the overall structural strength of the second wall body 234b can be improved. The step surface 232b and the bottom surface 232a of the second recess 232 can limit the first sealing member 50 and the second sealing member 60, respectively, and reduce the risk of the second sealing member 60 being pressed and extending between the first sealing member 50 and the step surface 232b, thereby preventing the second sealing member 60 from interfering with the connection between the first sealing member 50 and the second wall body 234b to a certain extent, and improving the reliability.

In some embodiments, the connecting part 52 is entirely accommodated in the second recess 232.

In some embodiments, in the second direction Z, the distance between the outer surface of the wall main body 233 and the step surface 232b is 0.3 mm to 1 mm. Optionally, the distance between the outer surface of the wall main body 233 and the step surface 232b is 0.3 mm, 0.5 mm, 0.7 mm, 0.8 mm, or 1 mm.

In some embodiments, the area of the step surface 232b is S3, and S3/S2 is 1.5-5.

In the embodiments of the present application, S3/S2 is defined to be greater than or equal to 1.5 to increase a welding area between the first sealing member 50 and the second wall body 234b and enhance the connection strength. In the embodiments of the present application, S3/S2 is defined to be less than or equal to 5 to limit the total area of the second recess 232 and reduce the risk of interference between the first convex wall 234 and other structures of the battery cell 6.

In some embodiments, the step surface 232b is an annular plane.

In some embodiments, optionally, S3/S2 is 1.5, 2, 2.5, 3, 3.5, 4, 4.5, or 5. Optionally, S3/S2 is 2.5-4.

In some embodiments, the maximum diameter of the second recess 232 is D6. D6/D1 may be 1.6-2.5.

In the embodiments of the present application, D6/D1 is defined to be greater than or equal to 1.6, so as to increase the welding area between the first sealing member 50 and the second wall body 234b, improve the structural strength of the battery cell 6 around the first through hole 20a, and reduce the risk of cracking of the first housing wall 23 around the first through hole 20a. In the embodiments of the present application, D6/D1 is defined to be less than or equal to 2.5 to limit the total area of the second recess 232 and reduce the risk of interference between the first convex wall 234 and other structures of the battery cell 6.

Optionally, D6/D1 is 1.6, 1.8, 2, 2.2, 2.4, or 2.5.

Optionally, D6/D1 is 1.8-2.2.

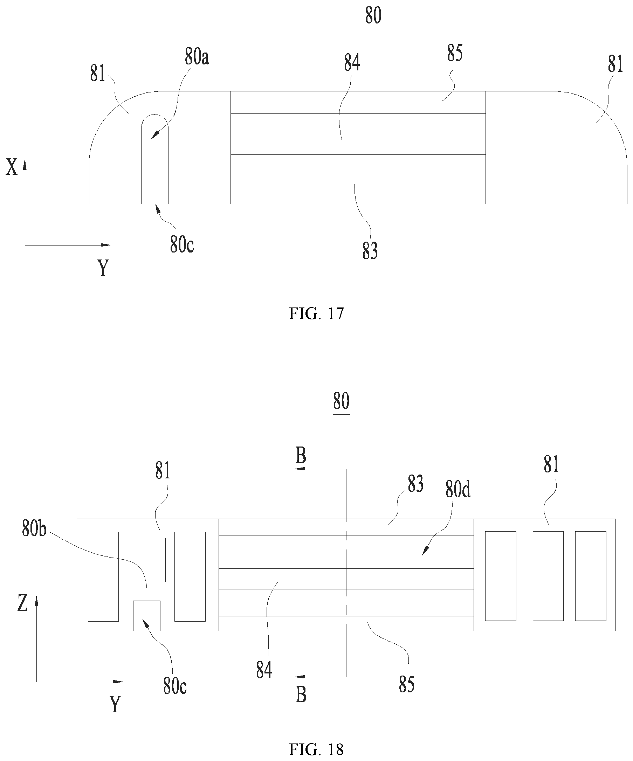

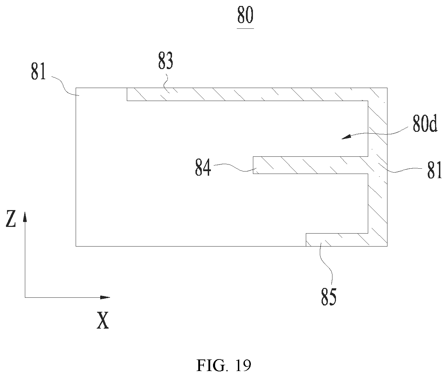

FIG. 16 is a schematic partial cross-sectional view of a battery cell at a first through hole according to some other embodiments of the present application; FIG. 17 is a schematic structural diagram of a support according to some embodiments of the present application; FIG. 18 is a schematic structural diagram of the insulating support shown in FIG. 17 from another angle; and FIG. 19 is a schematic cross-sectional view taken along a B-B direction in FIG. 18.

Referring to FIGs. 5 and 16-19, in some embodiments, the battery cell 6 further includes a support 80. The support 80 is provided with a drainage recess 80a in communication with the first through hole 20a, and the drainage recess 80a is in communication with a space between the main body part 11 and the support 80. In the axial direction of the first through hole 20a, the first through hole 20a is opposite to the bottom wall 80b of the drainage recess.

The bottom wall 80b of the drainage recess may bear the impact of the electrolyte and guide the electrolyte to flow in the drainage recess 80a, thereby reducing the impact of the electrolyte on the main body part 11 and reducing the deformation of a separator of the main body part 11. The support 80 may also support the housing 20 to reduce the risk of the housing 20 being pressed and deformed by an external device during the injection process of the electrolyte and improve the reliability of the battery cell 6.

In some embodiments, the support 80 and the main body part 11 are disposed in the first direction X.

In some embodiments, the side of the support 80 facing the first housing wall 23 is provided with a drainage recess 80a.

In some embodiments, the housing 20 includes a first housing wall 23. The first housing wall 23 includes a wall main body 233 and a first convex wall 234, and at least a portion of the first convex wall 234 protrudes from the surface of the wall main body 233 facing the main body part 11 and is located on one side of the main body part 11 in the first direction X. The first convex wall 234 includes a first wall body 234a configured to define the first through hole 20a. At least a portion of the first wall body 234a is accommodated in the drainage recess 80a and is spaced apart from the bottom wall 80b of the drainage recess.

The drainage recess 80a may further form a clearance for the first wall body 234a, provide more space for the first wall body 234a, and increase the depth of the first through hole 20a.

In some embodiments, the support 80 is an insulating support.

In some embodiments, the drainage recess 80a forms a liquid injection opening 80c on the surface of the support 80 facing the main body part 11. The electrolyte may flow out through the liquid injection opening 80c and infiltrate the main body part 11.

In some embodiments, a portion of the second sealing member 60 extends into the drainage recess 80a. Illustratively, the small end 62 is accommodated in the drainage recess 80a.

In some embodiments, the support 80 is attached to the wall main body 233 to support the wall main body 233 and reduce the deformation of the wall main body 233.

In some embodiments, the support 80 is fixed to the wall main body 233.

In some embodiments, the side of the support 80 facing the main body part 11 is provided with an accommodating recess 80d. At least a portion of the first tab 12 is accommodated in the accommodating recess 80d. The support 80 may accommodate the first tab 12 and separate at least a portion of the first tab 12 from the housing 20 to reduce the risk of a short circuit. The accommodating recess 80d may also gather the first tab 12 to reduce the risk of splaying of the first tab 12.

In some embodiments, the support 80 includes two support blocks 81, and the accommodating recess 80d is located between the two support blocks 81 in the third direction Y.

In some embodiments, the drainage recess 80a is disposed on one support block 81. The support block 81 separates the drainage recess 80a from the accommodating recess 80d to reduce the risk of the electrolyte directly impacting the first tab 12.

In some embodiments, each support block 81 is provided with a weight reduction hole.

In some embodiments, the support 80 includes an insulating substrate 82, a first limiting plate 83, a second limiting plate 84, and a third limiting plate 85. The first limiting plate 83, the second limiting plate 84, and the third limiting plate 85 are all located on the side of the insulating substrate 82 facing the main body part 11 and are sequentially spaced apart from each other in the second direction Z. The third limiting plate 85 is closer to the first housing wall 23 than the first limiting plate 83 and the second limiting plate 84.

In the third direction Y, the first limiting plate 83, the second limiting plate 84, and the third limiting plate 85 are all located between the two support blocks 81. The two support blocks 81, the first limiting plate 83, the second limiting plate 84, and the insulating substrate 82 define the accommodating recess 80d.

At least a portion of the third limiting plate 85 is sandwiched between the adapter member 31 and the first housing wall 23 to fix the support 80 to the first housing wall 23.

According to some embodiments of the present application, the present application further provides a battery. The battery includes a plurality of battery cells according to any one of the above embodiments.

According to some embodiments of the present application, the present application further provides an electric device. The electric device includes the battery cell according to any one of the above embodiments. The battery cell is configured to provide electric energy for the electric device. The electric device may be any one of the aforementioned devices or systems that use the battery cell.

Referring to FIGs. 4-10, the embodiments of the present application provide a battery cell 6, which includes an electrode assembly 10, a housing 20, a first sealing member 50, and a second sealing member 60.

The electrode assembly 10 includes a main body part 11, a first tab 12, and a second tab 13. The first tab 12 and the second tab 13 have opposite polarities and respectively extend from two ends of the main body part 11 in the first direction X.

The housing 20 includes a housing body 21 and a cover plate 22. An opening is disposed on one side of the housing body 21 in the second direction Z, and the cover plate 22 lids the opening and defines an accommodating cavity 20c with the housing body 21.

The cover plate 22 includes a wall main body 233, a first convex wall 234, and a second convex wall. The first convex wall 234 and the second convex wall protrude from the surface of the wall main body 233 facing the main body part 11, and the first convex wall 234 and the second convex wall are respectively located on two sides of the main body part 11 in the first direction X. Illustratively, the first convex wall 234 and the second convex wall are disposed in a diagonal direction of the cover plate 22.

The first convex wall 234 includes a first wall body 234a and a second wall body 234b. The first wall body 234a defines the first through hole 20a, the second wall body 234b is disposed around the first wall body 234a and connected to the wall main body 233 and the first wall body 234a, the second wall body 234b protrudes inward from the wall main body 233 and is configured to define the second recess 232, the second recess 232 is recessed from the outer surface of the wall main body 233, and the first through hole 20a extends inward from the bottom surface 232a of the second recess 232. Illustratively, the structure of the second convex wall is the same as that of the first convex wall 234.

The second sealing member 60 is inserted into the first through hole 20a and seals the first through hole 20a. The first sealing member 50 is welded to the wall main body 233 and located on the outer side of the second sealing member 60, thereby sealing the first through hole 20a.

At least a portion of the second convex wall is configured to define the second through hole 20b. A portion of the accommodating cavity 20c on the side of the main body part 11 facing the first tab 12 communicates with the first through hole 20a, and a portion of the accommodating cavity 20c on the side of the main body part 11 facing the second tab 13 communicates with the second through hole 20b. The first through hole 20a is configured to inject the electrolyte, and the second through hole is configured to exhaust gas during the injection of the electrolyte.

In the axial direction of the first through hole 20a, neither the first tab 12 nor the main body part 11 overlaps with the first through hole 20a. In the axial direction of the second through hole 20b, neither the second tab 13 nor the main body part 11 overlaps with the second through hole 20b. Both the axial direction of the first through hole 20a and the axial direction of the second through hole 20b are parallel to the second direction Z.

Referring to FIGs. 4-10, the embodiments of the present application provide a battery cell 6, which includes an electrode assembly 10, a housing 20, and a first sealing member 50.

The electrode assembly 10 includes a main body part 11 and a first tab 12. The main body part 11 includes a first end surface and a second end surface oppositely disposed in the first direction X, and the first tab 12 extends from the first end surface.

The housing 20 is provided with an accommodating cavity 20c, the electrode assembly 10 is disposed in the accommodating cavity 20c, and the housing 20 is provided with a first through hole 20a and a second through hole 20b. The first through hole 20a and the second through hole 20b are respectively located on two sides of the main body part 11 in the first direction X, a portion of the accommodating cavity 20c on one side of the first tab 12 communicates with the first through hole 20a, and a portion of the accommodating cavity 20c on the side of the main body part 11 facing away from the first tab 12 communicates with the second through hole 20b. The first through hole 20a is configured to inject an electrolyte. In the axial direction of the first through hole 20a, neither the first tab 12 nor the main body part 11 overlaps with the first through hole 20a. The housing 20 includes a first housing wall 23. The first housing wall 23 includes a wall main body 233 and a first convex wall 234, at least a portion of the first convex wall 234 protrudes from the surface of the wall main body 233 facing the main body part 11 and is located on one side of the main body part 11 in the first direction X, and the first convex wall 234 includes a first wall body 234a configured to define the first through hole 20a.

The first sealing member 50 includes a first protrusion 51 and a connecting part 52 disposed around the first protrusion 51. The connecting part 52 is located on the outer side of the first housing wall 23 and connected to the first housing wall 23. The first protrusion 51 protrudes from the surface of the connecting part 52 facing away from the first housing wall 23, the first sealing member 50 is provided with a first recess 53 at a position corresponding to the first protrusion 51, and the first recess 53 is recessed relative to the surface of the connecting part 52 facing the first housing wall 23.

Although the present application has been described with reference to preferred embodiments, various modifications can be made and components herein can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

**Claims**

1. A battery cell, comprising:

    an electrode assembly, comprising a main body part and a first tab, the first tab extending from one end of the main body part in a first direction; and
    a housing, provided with an accommodating cavity, wherein the electrode assembly is disposed in the accommodating cavity, the housing is provided with a first through hole and a second through hole, a portion of the accommodating cavity on a side of the first tab communicates with the first through hole, a portion of the accommodating cavity on a side of the main body part facing away from the first tab communicates with the second through hole, the first through hole is configured to inject an electrolyte, and in an axial direction of the first through hole, neither the first tab nor the main body part overlaps with the first through hole.

2. The battery cell according to claim 1, wherein the housing comprises a first housing wall and a second housing wall oppositely disposed in a second direction, the main body part is located between the first housing wall and the second housing wall, and the second direction is parallel to a thickness direction of the battery cell and perpendicular to the first direction;
the first housing wall is a flat wall, and the first through hole is disposed in the first housing wall.

3. The battery cell according to claim 2, wherein a minimum hole diameter of the first through hole is D1, a dimension of the first housing wall along a third direction is W, and the third direction is perpendicular to the first direction and the second direction;

$$0.02 \leq D1/W \leq 0.2.$$

4. The battery cell according to claim 3, wherein 2 mm ≤ D1 ≤ 10 mm.

5. The battery cell according to any one of claims 1 to 4, further comprising a first sealing member, wherein the first sealing member is connected to the housing and configured to seal the first through hole.

6. The battery cell according to claim 5, wherein the first sealing member comprises a first protrusion and a connecting part disposed around the first protrusion, the connecting part is located on an outer side of the housing and connected to the housing, and the first protrusion protrudes from a surface of the connecting part facing away from the housing.

7. The battery cell according to claim 6, wherein in the axial direction of the first through hole, a dimension H2 of the first protrusion protruding from an outer surface of the housing satisfies: $0.5\,mm \leq H2 \leq 2\,mm$.

8. The battery cell according to claim 6 or 7, wherein the first sealing member is provided with a first recess at a position corresponding to the first protrusion, and the first recess is recessed relative to a surface of the connecting part facing the housing.

9. The battery cell according to claim 8, further comprising a second sealing member, wherein a portion of the second sealing member is inserted into the first through hole, and another portion of the second sealing member is accommodated in the first recess.

10. The battery cell according to any one of claims 5 to 9, wherein

    an outer side of the housing is provided with a housing recess;
    in the second direction, the first sealing member is located on a side of the housing facing away from the housing recess, and the second direction is perpendicular to the first direction.

11. The battery cell according to any one of claims 5 to 10, wherein the first sealing member is welded to the housing and forms a welded part.

12. The battery cell according to claim 11, wherein the housing is provided with a weak part, and a minimum distance between the welded part and the weak part is greater than or equal to 1 mm.

13. The battery cell according to claim 11 or 12, wherein the welded part is annular, an outer diameter of the welded part is D2, the minimum hole diameter of the first through hole is D1, and $1.6 \leq D2/D1 \leq 2.5$.

14. The battery cell according to any one of claims 11 to 13, wherein
    an area of the welded part is S1, an area of a minimum cross section of the first through hole perpendicular to the axial direction thereof is S2, and $1.5 \leq S1/S2 \leq 5$.

15. The battery cell according to any one of claims 5 to 14, wherein the housing is provided with a second recess, and the first through hole extends inward from a bottom surface of the second recess;
at least a portion of the first sealing member is configured to be accommodated in the second recess.

16. The battery cell according to any one of claims 1 to 15, further comprising the second sealing member, wherein a portion of the second sealing member is inserted into the first through hole.

17. The battery cell according to any one of claims 1 to 16, wherein the housing comprises the first housing wall, the first housing wall comprises a wall main body and a first convex wall, and at least a portion of the first convex wall protrudes from a surface of the wall main body facing the main body part and is located on one side of the main body part in the first direction;
the first convex wall comprises a first wall body configured to define the first through hole.

18. The battery cell according to claim 17, wherein a dimension of the first wall body along the second direction is H1, the minimum hole diameter of the first through hole is D1, and $0.2 \leq H1/D1 \leq 1$; the second direction is parallel to a thickness direction of the wall main body.

19. The battery cell according to claim 17 or 18, further comprising the second sealing member, wherein at least a portion of the second sealing member is inserted into the first through hole and detachably connected to the first convex wall.

20. The battery cell according to claim 19, wherein the second sealing member is in interference fit with the first through hole.

21. The battery cell according to claim 19 or 20, wherein the second sealing member is provided with a large end and a small end oppositely disposed in the axial direction of the first through hole, and the small end is located on an inner side of the large end;
a ratio of a diameter of the small end to the minimum hole diameter of the first through hole is 0.95-1.05, and a diameter of the large end is greater than a maximum hole diameter of the first through hole.

22. The battery cell according to any one of claims 19 to 21, wherein an outer periphery of the second sealing member is provided with an annular third recess, and at least a portion of the first wall body is accommodated in the third recess.

23. The battery cell according to any one of claims 19 to 22, wherein the first convex wall further comprises a second wall body, the second wall body is disposed around the first wall body and connected to the wall main body and the first wall body, the second wall body protrudes inward from the wall main body and is configured to define the second recess, the second recess is recessed from an outer surface of the wall main body, and the first through hole extends inward from the bottom surface of the second recess; at least a portion of the second sealing member is accommodated in the second recess.

24. The battery cell according to claim 23, wherein the second wall body is provided with a step surface, and in the axial direction of the first through hole, the step surface is closer to the outer surface of the wall main body than the bottom surface of the second recess;

a projection of the step surface in the axial direction of the first through hole surrounds a projection of the bottom surface of the second recess in the axial direction of the first through hole; the battery cell further comprises the first sealing member, and at least a portion of the first sealing member is accommodated in the second recess and abuts against the step surface.

25. The battery cell according to any one of claims 1 to 24, further comprising a support, wherein the support is accommodated in the housing;

the support is provided with a drainage recess in communication with the first through hole, and the drainage recess is in communication with a space between the main body part and the support; in the axial direction of the first through hole, the first through hole is opposite to a bottom wall of the drainage recess.

26. The battery cell according to claim 25, wherein

the housing comprises the first housing wall, the first housing wall comprises the wall main body and the first convex wall, and at least a portion of the first convex wall protrudes from the surface of the wall main body facing the main body part and is located on the side of the main body part in the first direction; the first convex wall comprises the first wall body configured to define the first through hole; at least a portion of the first wall body is accommodated in the drainage recess and is spaced apart from the bottom wall of the drainage recess.

27. The battery cell according to any one of claims 1 to 26, wherein a minimum hole diameter of the second through hole is less than or equal to the minimum hole diameter of the first through hole.

28. The battery cell according to any one of claims 1 to 27, wherein the second through hole is configured to inject an electrolyte.

29. The battery cell according to any one of claims 1 to 28, wherein the housing comprises a housing body and a cover plate, the housing body is provided with an opening, and the cover plate lids the opening; the first through hole and the second through hole are disposed on the cover plate.

30. The battery cell according to any one of claims 1 to 29, wherein a dimension of the housing along the first direction is L1, a dimension of the housing along the second direction is L2, a dimension of the housing along the third direction is L3, and any two of the first direction, the second direction, and the third direction are perpendicular to each other;

$$1.2 \leq L1/L3 \leq 18, \text{ and } 1.2 \leq L3/L2 \leq 15.$$

31. A battery, comprising a plurality of said battery cells according to any one of claims 1 to 30.

32. An electric device, comprising the battery according to claim 31.

1

FIG. 1

2

FIG. 2

2

6

40

30

25

7

40

Z

X

6

6

FIG. 3

6

X

22 (23)

231

Y

50

40

30 { 32
      33

A

A

L3

A

A

L1

FIG. 4

6

FIG. 5

FIG. 6

FIG. 7

FIG. 8

FIG. 9

FIG. 10

FIG. 11

60

FIG. 12

FIG. 13

FIG. 14

23

232b   232a   232

233

Y

234 { 234b
      234a

231

Z

FIG. 15

50

60

23

231

20a

80

80a

80b

Y

Z

FIG. 16

80

81    80a         84    85         81

X

80c

Y

FIG. 17

80

81         B         83  80d      81

80b

Z

80c    84   B   85

Y

FIG. 18

FIG. 19

# INTERNATIONAL SEARCH REPORT

| | International application No. |
|---|---|
| | **PCT/CN2024/081662** |

| A. | CLASSIFICATION OF SUBJECT MATTER |
|---|---|

H01M50/102(2021.01)i; H01M50/627(2021.01)i; H01M50/30(2021.01)i; H01M10/04(2006.01)i; H01M10/0 58(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, DWPI, WPABS, ENTXT, CNKI: 电池, 极耳, 壳, 孔, 注, 电解质, 密封, 焊接, battery, tab, shell, hole, opening, inject, electrolyte, seal, weld

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117199643 A (CONTEMPORARY AMPEREX TECHNOLOGY CO., LTD.) 08 December 2023 (2023-12-08) claims 1-32, description, paragraphs 4-355, and figures 1-19 | 1-32 |
| Y | CN 115706295 A (TAIXING ENERGY SOLUTIONS CO., LTD.) 17 February 2023 (2023-02-17) description, paragraphs 91-138, and figures 1-21 | 1-32 |
| Y | CN 214848811 U (EVE POWER CO., LTD.) 23 November 2021 (2021-11-23) description, paragraphs 27-37, and figures 1-5 | 1-32 |
| Y | CN 218939856 U (CONTEMPORARY AMPEREX TECHNOLOGY CO., LTD.) 28 April 2023 (2023-04-28) description, paragraphs 69-133, and figures 1-6 | 5-16, 19-26 |
| A | CN 116636077 A (CONTEMPORARY AMPEREX TECHNOLOGY CO., LTD.) 22 August 2023 (2023-08-22) entire document | 1-32 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 July 2024** | **24 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/081662** |

### C. DOCUMENTS CONSIDERED TO BE RELEVANT

| Category* | Citation of document, with indication, where appropriate, of the relevant passages | Relevant to claim No. |
| --- | --- | --- |
| A | KR 20080072132 A (SAMSUNG SDI CO., LTD.) 06 August 2008 (2008-08-06) entire document | 1-32 |
| A | WO 2023174047 A1 (CONTEMPORARY AMPEREX TECHNOLOGY CO., LTD.) 21 September 2023 (2023-09-21) entire document | 1-32 |

Form PCT/ISA/210 (second sheet) (July 2022)

**INTERNATIONAL SEARCH REPORT**
**Information on patent family members**

International application No.

**PCT/CN2024/081662**

| Patent document cited in search report | | | Publication date (day/month/year) | Patent family member(s) | | | Publication date (day/month/year) |
|---|---|---|---|---|---|---|---|
| CN | 117199643 | A | 08 December 2023 | None | | | |
| CN | 115706295 | A | 17 February 2023 | US | 2023039913 | A1 | 09 February 2023 |
| | | | | JP | 2023023359 | A | 16 February 2023 |
| CN | 214848811 | U | 23 November 2021 | None | | | |
| CN | 218939856 | U | 28 April 2023 | WO | 2024087047 | A1 | 02 May 2024 |
| CN | 116636077 | A | 22 August 2023 | WO | 2023050197 | A1 | 06 April 2023 |
| | | | | US | 2024097287 | A1 | 21 March 2024 |
| | | | | EP | 4358277 | A1 | 24 April 2024 |
| KR | 20080072132 | A | 06 August 2008 | US | 2008160393 | A1 | 03 July 2008 |
| WO | 2023174047 | A1 | 21 September 2023 | CN | 217158403 | U | 09 August 2022 |

Form PCT/ISA/210 (patent family annex) (July 2022)

**EP 4 773 352 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311458303